# EUROPEAN PATENT SPECIFICATION

(11) **EP 4 402 208 B1**
(45) Date of publication and mention of the grant of the patent: **01.07.2026**
(21) Application number: 22786320.6
(22) Date of filing: 13.09.2022
(51) Int. Cl.: C08L 25/14, C08L 51/04, C08L 25/12, C08F 265/04

(54) **ASA-COPOLYMER COMPOSITIONS WITH INCREASED TRANSMITTANCE AND PROCESS FOR THE PREPARATION THEREOF**
ASA-COPOLYMER-ZUSAMMENSETZUNGEN MIT ERHÖHTER LICHTDURCHLÄSSIGKEIT UND VERFAHREN ZUR HERSTELLUNG DAVON
COMPOSITIONS ASA-COPOLYMÈRES À TRANSMITTANCE AMÉLIORÉE ET LEUR PROCÉDÉ DE PRÉPARATION

(30) Priority: 14.09.2021 EP 21196689
(43) Date of publication of application: 24.07.2024
(73) Proprietor: INEOS Styrolution Group GmbH, 60325 Frankfurt (DE)
(72) Inventor: ROWLETT, Jarrett R., Oswego, Illinois 60543 (US); COCHRAN, Thomas W., Wilmington, Illinois 60481 (US); NIESSNER, Norbert, 67159 Friedelsheim (DE)
(74) Representative: Jacobi, Markus Alexander
(86) International application number: PCT/EP2022/075363
(87) International publication number: WO 2023/041510

(56) References cited:
- WO-A2-03/074608
- JP-B2- 5 424 524
- US-A1- 2021 108 070

## Description

The present invention relates to thermoplastic impact resistant acrylonitrile-styrene-acrylate compositions having an increased light transmittance in relation to conventional impact resistant compositions, a process for the preparation and a shaped article made therefrom.

Impact modified thermoplastic compositions, such as acrylonitrile styrene acrylate (ASA), and blends thereof with other thermoplastic polymers are widely used in many applications, such as in the automotive industry, electronic industry or for household goods. The popularity of these thermoplastic polymer compositions may be attributed to their balanced properties of good impact strength, melt flow characteristics and high weathering stability.

WO 2021/074154 (INEOS Styrolution) discloses molding compositions with high gloss surfaces and improved weatherability in relation to ASA polymers, comprising an acrylate based graft copolymer as impact modifier, a polymer matrix based on vinylaromatic copolymer and a homopolymer of alkyl methacrylate or a copolymer of alkyl methacrylate with a vinylaromatic monomer or vinyl cyanide. US2020/216656 and US 3,922,321 disclose impact modified thermoplastic compositions, wherein the impact modifier comprises acrylate monomers both in the graft shell of the impact modifier and in the polymer matrix. WO 03/074608 discloses rubber-modified styrenic blends comprising a matrix of a mixture of polymethylmethacrylate and a terpolymer of methyl methacrylate, styrene and acrylonitrile. US 2021/0108070 discloses a thermoplastic resin composition which includes a matrix copolymer including an alkyl(meth)acrylate, an aromatic vinyl-based monomer and a vinyl cyan-based monomer, and an additive including a polymer of an alkyl (meth)acrylate-based monomer unit.

Typical impact-modified thermoplastic ASA compositions (comprising acrylate-based graft copolymers as impact modifiers, and styrene-acrylonitrile copolymers as the polymer matrix) and articles prepared therefrom are generally opaque, and typically have insufficient light transmitting properties for applications that require light to pass through, e.g. in back-light automotive parts. In particular, typical impact modified thermoplastic compositions composed of ASA graft copolymers as the impact modifier and styrene-acrylonitrile (SAN) copolymers as the polymer matrix tend to be opaque.

Specifically, such compositions often have a luminous transmittance of less than 13% (as measured according to ASTM D1003 - 21 using CIE illuminant C at a material thickness of 3 mm).

Therefore, there is a need for impact-modified thermoplastic compositions that are better suited for applications requiring light to pass through, but still maintain advantageous properties of ASA-based impact-modified thermoplastic compositions.

An object of the invention is therefore the provision of an impact modified thermoplastic composition having an increased luminous transmittance (relative to those composed of ASA graft copolymers as the impact modifier and styrene-acrylonitrile (SAN) copolymers as the polymer matrix), e.g. of 13% or greater.

It was surprisingly found that impact modified thermoplastic compositions based on alkyl (meth)acrylate have a luminous transmittance of 13% or more (as measured according to ASTM D1003 - 21 using CIE illuminant C at a material thickness of 3 mm) in their natural state (i.e. in the absence of pigments, dyes, light stabilizers and UV absorbers), and therefore are better suited for applications that require light to pass through, e.g. in back-light automotive parts, if the styrene-acrylonitrile (SAN) polymer matrix is partially or fully replaced by a random copolymer of a vinyl aromatic monomer and an alkyl (meth)acrylate, such as styrene-methyl methacrylate (SMMA), having 30 to 70% by weight of alkyl (meth)acrylate repeating units. The term (meth)acrylate is to be understood as "acrylate and/or methacrylate".

One aspect of the invention is therefore a thermoplastic composition (P), as set out in the appended set of claims, comprising:
a) 25 to 45% by weight, preferably 28 to 42% by weight, based on the total weight of the thermoplastic composition (P), of at least one graft copolymer (A) composed of:
   a1) a graft base (A1) comprising at least one alkyl (meth)acrylate-based rubber, preferably butyl acrylate-based rubber; and
   a2) a graft shell (A2) comprising at least one type of vinylaromatic repeating units, preferably styrene, and optionally at least one type of vinyl cyanide repeating units, preferably acrylonitrile;
b) 25 to 75% by weight, preferably 28 to 72% by weight, based on the total weight of the thermoplastic composition (P), of at least one random copolymer (B), different from (A), comprising:
   b1) 30 to 70% by weight, based on the total weight of the copolymer (B) of at least one type of alkyl(meth)acrylate repeating units (B1), preferably methyl methacrylate repeating units; and
   b2) 30 to 70% by weight, based on the total weight of the copolymer (B) of at least one type of vinylaromatic repeating units (B2), preferably styrene repeating units; and
c) 0 to 50% by weight, preferably 0 to 30% by weight, based on the total weight of the thermoplastic composition (P), of at least one copolymer (C), different from (A) and (B), comprising:
   c1) 15 to 45% by weight, based on the total weight of the copolymer (C), of at least one type of vinyl cyanide repeating units (C1), preferably acrylonitrile repeating units; and
   c2) 55 to 85% by weight, based on the total weight of the copolymer (C), of at least one type of vinylaromatic repeating units (C2), preferably styrene repeating units.

The amount of acrylonitrile repeating units in the random copolymer (B) is smaller than 5% by weight, based on the total weight of the copolymer (B).

It has been found that the presence of homopolymers of methyl methacrylate, in particular poly(methyl methacrylate) (PMMA) may lead to deterioration of impact resistance. Therefore, the thermoplastic composition (P) does not contain any homopolymers of methyl methacrylate.

The thermoplastic composition (P) has greater luminous transmission than compositions, wherein a random copolymer (B) is absent. Typically, the thermoplastic composition (P) has a luminous transmittance of 13% or more (as measured according to ASTM D1003 - 21 using CIE illuminant C at a material thickness of 3 mm).

In its natural state, the thermoplastic composition (P) does not contain any pigments, dyes, light stabilizers and UV absorbers. However, especially for outdoor applications, such as in automotive parts, it is often important to increase weathering resistance of the thermoplastic composition (P). Therefore, in addition to components (A), (B) and (C) described above, the thermoplastic composition may optionally contain:
d) 0 to 2% by weight, preferably 0.01 to 1.5% by weight, more preferably 0.02 to 1% by weight, based on the total weight of the thermoplastic composition (P), of at least one additive (D) selected from UV absorbers, light stabilizers and antioxidants.

Furthermore, often articles prepared from thermoplastic compositions, including impact modified compositions, are colored, e.g. for aesthetic reasons, with dark colors being particularly popular in many applications, e.g. in automotive industry, electronic industry or for household goods. EP-A 1685192 discloses a polymer composition used for laser inscription, based on a rubber latex, a black pigment and a dye. US 2005/0014863 and US 7,077,898 disclose pigment-containing polymer compositions comprising carbon black and another pigment. WO 2015/036526 and US 2016/222185 (INEOS Styrolution) disclose deep black thermoplastic molding compositions having high gloss. These compositions are based on styrene copolymers, polymethyl methacrylate, polycarbonates or polyester carbonates that are combined with carbon black and at least a dye soluble in the molding compositions. However, these compositions are not impact modified.

The thermoplastic composition (P), can also be used in colored applications, wherein impact modified compositions are required. Therefore, in addition to components (A), (B) and (C), and optionally (D) described above, the thermoplastic composition may optionally contain:
e) 0 to 5% by weight, preferably 0.01 to 3% by weight, more preferably 0.02 to 2% by weight, more preferably 0.05 to 1% by weight, based on the total weight of the thermoplastic composition (P), of at least one colorant (E) selected from pigments and dyes.

In some embodiments, thermoplastic composition (P) may optionally comprise further components, e.g. further polymeric components or further additives.

Preferably, except for the at least one graft copolymer (A), no further graft copolymers are present in the thermoplastic composition (P). Also preferably, except for the at least one random copolymer (B), no other random copolymers comprising alkyl (meth)acrylate repeating units and vinylaromatic repeating units are present in the thermoplastic composition (P). Also preferably, except for the at least one copolymer (C), no other copolymers comprising vinyl cyanide repeating units and vinylaromatic repeating units are present in the thermoplastic composition (P).

More preferably, all three of these preferred conditions apply. More preferably, except for graft copolymer (A), random copolymer (B), copolymer (C), if present, additive (D), if present and polymeric, and colorant (E), if present and polymeric, no other polymeric components are present in the thermoplastic composition (P). Particularly preferably, the amounts of components (A), (B), (C), (D), (E) and optionally lubricants amount to 100% by weight of the thermoplastic composition (P).

Whilst not being bound by theory, it is assumed that in thermoplastic compositions comprising a graft copolymer (A) based on alkyl (meth)acrylate as the graft base, and a copolymer (C) based on SAN, wherein the SAN matrix is not partially or fully replaced by a random copolymer (B), the refractive indices of the alkyl(meth)acrylate graft base in graft copolymer (A) and copolymer (C) are too far apart, which leads to strong diffusion of light passing through the composition, and thus to an opaque appearance thereof (i.e. low luminous transmittance).

In contrast, it is assumed that in the composition of the invention, an amount of alkyl(meth)acrylate repeating units (B1) in the at least one random copolymer (B) of 30% by weight or more, based on the total weight of the copolymer (B), leads to the refractive index of the copolymer (B) being closer to the refractive index of the alkyl(meth)acrylate-based rubber in the graft copolymer (A) and to increased compatibility therewith, than it is the case for SAN copolymers. It is assumed that this leads to reduced diffusion of light, and therefore higher luminous transmittance values compared to thermoplastic compositions wherein the component (B) is absent.

Typically, the difference in refractive index between the graft copolymer (A) and the random copolymer (B) is less than 0.05, often less than 0.04, as measured using a prism coupler (e.g. Metricon Model 2010) at 23 °C, calculated for a wavelength of 589.3 nm from measurements using monochromatic light having wavelengths of 401 nm, 513 nm and 688 nm.

Furthermore, whilst not being bound by theory, it is assumed that the amount of 30% by weight or more of vinylaromatic repeating units (B2) in the at least one random copolymer (B), leads to sufficient compatibility of the component (B) with the graft shell of the graft copolymer (A) comprising vinylaromatic repeating units and, if present, the portion of the polymer matrix derived from copolymer (C), also comprising vinylaromatic repeating units. It is assumed that due to the compatibility of the components, good thermal and physical properties, such as impact resistance, hardness and stiffness, are maintained, which is not the case if PMMA is used as the matrix material.

It will be understood by those skilled in the art that a certain repeating unit is the repeating unit obtainable by polymerization of the respective monomer. For example, vinylaromatic repeating units are obtainable by polymerization of vinylaromatic monomers, alkyl (meth)acrylate repeating units are obtainable by polymerization of alkyl (meth)acrylate monomers and repeating units (B1), (B2), (C1) and (C2) are obtainable by polymerization of monomers (B1), (B2), (C1) and (C2), respectively. Furthermore, in certain cases, the terms "repeating unit" and "monomer" are used interchangeably.

It will be understood by those skilled in the art, that a polymerization of certain repeating units means that the respective monomers are polymerized to form these repeating units, and that a polymer or copolymer containing certain monomers does not contain the monomers themselves (i.e. the unsaturated compounds), but rather the repeating units obtainable by polymerization of the respective monomers.

The individual components of the thermoplastic composition (P) of the invention.

### Graft copolymer (A)

The thermoplastic composition (P) comprises 25 to 45% by weight, preferably 28 to 42% by weight, more preferably 30 to 40% by weight, more preferably 33 to 37% by weight, based on the total weight of the thermoplastic composition (P) of at least one graft copolymer (A).

In general, the graft copolymer (A) is composed of a graft base (A1) comprising at least one alkyl (meth)acrylate-based rubber, and a graft shell (A2) comprising at least one type of vinylaromatic repeating units, and optionally at least one type of vinyl cyanide repeating units.

Preferably, the at least one graft copolymer (A) is composed of:
a1) from 40 to 90% by weight, more preferably from 45 to 85% by weight, more preferably from 50 to 80% by weight, based on the total weight of the graft copolymer (A), of a graft base (A1) comprising (or consisting of) at least one alkyl (meth)acrylate-based rubber; and a2) from 10 to 60% by weight, more preferably from 15 to 55% by weight, more preferably from 20 to 50% by weight, based on the total weight of the graft copolymer (A), of a graft shell (A2) comprising (or consisting of) at least one type of vinylaromatic repeating units, and optionally at least one type of vinyl cyanide repeating units.

In the graft base (A1), the at least one alkyl (meth)acrylate-based rubber is preferably a C₁-C₈-alkyl (meth)acrylate-based rubber, more preferably a C₁-C₈-alkyl acrylate-based rubber, more preferably a butyl acrylate-based rubber, in particular an n-butyl acrylate based rubber.

For example, the graft base (A1) may comprise (preferably consist of)
a1-1) 65 to 99.99% by weight, preferably 65 to 99.9% by weight, more preferably 70 to 99.5% by weight, more preferably 75 to 99% by weight, more preferably 80 to 98% by weight, based on the total weight of graft base (A1), of at least one type of alkyl(meth)acrylate (A1-1), such as C₁-C₈-alkyl (meth)acrylate, preferably C₁-C₈-alkyl acrylate, more preferably butyl acrylate, in particular n-butyl acrylate;
a1-2) 0 to 34.99% by weight, preferably 0 to 29.9% by weight, more preferably 0 to 29.5% by weight, more preferably 0.5 to 24% by weight, more preferably 1 to 18% by weight, based on the total weight of graft base (A1), of at least one type of monofunctional monomer (A1-2) that is copolymerizable with the at least one alkyl (meth)acrylate (A1-1), such as styrene, α-methyl styrene, acrylonitrile, methacrylonitrile, methyl methacrylate, maleic acid anhydride and N-phenylmaleimide, preferably styrene, α-methyl styrene or acrylonitrile, particularly preferably styrene;
a1-3) 0.01 to 10% by weight, preferably 0.1 to 9% by weight, more preferably 0.5 to 7%, more preferably 1 to 6% by weight, more preferably 2 to 5% by weight, based on the total weight of graft base (A1), of at least one type of difunctional or polyfunctional cross-linking monomer (A1-3) that is copolymerizable with the at least one alkyl (meth)acrylate (A1-1), such as butadiene, isoprene, allyl(meth)acrylate, divinylbenzene, diallylmaleate, diallylfumarate, diallylphthalate, triallylcyanurat, triallylisocyanurat and dihydrodicyclo-pentadienyl acrylate (DCPA), preferably allyl(meth)acrylate, divinylbenzene, triallylcyanurat, triallylisocyanurat or DCPA, more preferably, allyl(meth)acrylate or DCPA, more preferably DCPA.

In a preferred embodiment, the graft base (A1) comprises (or consists of)
a1-1) 70 to 99.9% by weight of at least one type of alkyl (meth)acrylate (A1-1), preferably butyl acrylate;
a1-2) 0 to 29.5% by weight, based on the total weight of graft base (A1), of at least one type of monofunctional monomer (A1-2) that is copolymerizable with the at least one alkyl (meth)acrylate (A1-1), preferably styrene, alpha-methyl styrene and acrylonitrile; and
a1-3) 0.1 to 10% by weight, based on the total weight of graft base (A1), of at least one type of difunctional or polyfunctional crosslinking monomer (A1-3) that is copolymerizable with the at least one alkyl (meth)acrylate (A1-1).

In another preferred embodiment, the graft base (A1) comprises (or consists of) 75 to 99% by weight, based on the total weight of graft base (A1), of butyl acrylate, in particular n-butyl acrylate; a1-2) 0 to 24.5% by weight, based on the total weight of graft base (A1), of styrene; and a1-3) 1 to 7% by weight, based on the total weight of graft base (A1), of DCPA.

The graft shell (A2) comprises at least one type of vinylaromatic repeating units and optionally at least one type of vinyl cyanide repeating units. For certain purposes, the graft shell (A2) may also contain further monomers copolymerizable with the vinylaromatic repeating units, but preferably does not contain any further monomers apart from vinylaromatic repeating units and vinyl cyanide repeating units. Preferably, the vinylaromatic repeating units are selected from styrene, alpha-methyl styrene, 2-methyl styrene, 3-methyl styrene, 4-methyl styrene, 2,4-dimethyl styrene, 2,5-dimethyl styrene, 2,6-dimethyl styrene and 2,4,6-trimethyl styrene repeating units, more preferably styrene or alpha-methyl styrene repeating units, more preferably styrene repeating units. In preferred embodiments, at least 50% by weight, preferably at least 70% by weight, more preferably at least 90% by weight of the vinylaromatic repeating units in the graft shell (A2) are styrene. Particularly preferably, all vinylaromatic repeating units in the graft shell (A2) are styrene.

The vinyl cyanide repeating units in the graft shell (A2), if present, are preferably selected from methacrylonitrile and acrylonitrile, more preferably acrylonitrile repeating units. In some embodiments, the graft shell (A2) only contains vinylaromatic repeating units, preferably styrene or alpha-methyl styrene repeating units, in particular styrene repeating units. In some embodiments, the graft shell (A2) contains both vinylaromatic repeating units, in particular styrene repeating units, and vinyl cyanide repeating units, in particular acrylonitrile repeating units.

For example, the graft shell (A2) may comprise (or consist of) 50 to 100% by weight, preferably 52 to 95% by weight, more preferably 55 to 85% by weight, more preferably 65 to 75% by weight, based on the total weight of graft shell (A2), of styrene or alpha-methyl styrene repeating units, and from 0 to 50% by weight, preferably from 5 to 48% by weight, more preferably 15 to 45% by weight, more preferably 25 to 35% by weight, based on the total weight of graft shell (A2), of acrylonitrile repeating units.

Furthermore, the graft shell (A2) may contain from 0 to 20% by weight, based on the total weight of graft shell (A2), of further constituents, selected from repeating units of monoethylenically unsaturated monomers such as maleic anhydride or N-phenylmaleimide, and molecular weight regulators, e.g. thiol-based molecular weight regulators, such as tert-dodecyl-mercaptane.

The graft copolymer (A) may be prepared by any means known in the art. Preferably, the graft copolymer (A) is prepared in an emulsion polymerization process or a suspension polymerization process. The graft base (A1), comprising (or consisting of) repeating units (A1-1) and optionally (A1-2) and (A1-3) as well as its preparation are known and described in the literature, e.g. DE-A 28 26 925, DE-A 31 49 358 and DE-A 34 14 118.

The graft polymerization reaction used to synthesize the graft shell (A2) may be conveniently done in the same vessel as the polymerization (preferably emulsion polymerization) done for the synthesis of the graft base (A1). Alternatively, the graft polymerization may be done in a different vessel. During the reaction, additives, like emulsifiers, pH buffers and initiators can be added. The monomers of the graft shell (A2), especially the vinylaromatic monomers, and, if present, vinyl cyanide monomers, can be added to the reaction mixture at once, continuously or stepwise in several steps, preferably continuously during polymerization. When the vinylaromatic monomers and optionally the vinyl cyanide monomers are added in several steps, typically a multi-layered graft shell (A2) is obtained.

Suitable emulsifiers, buffers and initiators are described e.g. in WO 2015/150223 and WO 2015/078751.

In some preferred embodiments, the graft copolymer (A) is an acrylonitrile-styrene-acrylate (ASA) graft copolymer. In some preferred embodiments, the graft copolymer (A) is a styrene-acrylate graft copolymer.

Preferably, the at least one graft copolymer (A) has a volume average particle size (D₅₀), measured by laser diffraction, of from 30 to 1000 nm, more preferably from 70 to 800 nm, more preferably from 80 to 600 nm. Particle size measurements by laser diffraction are known in the art and are described, e.g. in "A Guidebook to Particle Size Analysis" issued by HORIBA Instruments, Inc., and other literature. The volume average particle size D₅₀ as used herein is the volume median particle size, i.e. 50% by volume of all particles have a size of equal to or below the D₅₀ value. The terms "volume average particle size", "D₅₀" and "volume median particle size" are used interchangeably in the context of the present invention.

In some preferred embodiments, the D₅₀ of the at least one graft copolymer (A) is from 30 to 340 nm, preferably from 50 to 320 nm, more preferably from 70 to 300 nm, more preferably from 80 to 250 nm.

In some other preferred embodiments, the D₅₀ of the at least one graft copolymer (A) is from 350 to 1000 nm, preferably from 380 to 800 nm, more preferably from 400 to 600 nm, more preferably from 450 to 550 nm.

Furthermore, in some preferred embodiments, the at least one graft copolymer (A) contains at least two graft copolymers (A-a) and (A-b), wherein at least one graft copolymer (A-a) has a D₅₀ of from 30 to 340 nm, preferably from 50 to 320 nm, more preferably from 70 to 300 nm, more preferably from 80 to 250 nm, and at least one graft copolymer (A-b) has a D₅₀ of from 350 to 1000 nm, preferably from 380 to 800 nm, more preferably from 400 to 600 nm, more preferably from 450 to 550 nm. In these preferred embodiments, the at least one graft copolymer (A) typically has a multi-modal particle size distribution, i.e., the particle size distribution has at least two local maxima.

Preferably, the thermoplastic composition (P) comprises from 10 to 40% by weight, more preferably from 15 to 35% by weight, more preferably from 20 to 30% by weight, more preferably from 22 to 25% by weight, based on the total weight of the thermoplastic composition (P), of at least one graft copolymer (A-a) having a volume-average particle size (D₅₀) of from 30 to 340 nm, preferably from 50 to 320 nm, more preferably from 70 to 300 nm, more preferably from 80 to 250 nm, and from 0 to 35% by weight, more preferably from 3 to 30% by weight, more preferably from 5 to 20% by weight, more preferably from 10 to 15% by weight, based on the total weight of the thermoplastic composition (P), of at least one graft copolymer (A-b) having a volume-average particle size (D₅₀), measured by laser diffraction, of from 350 to 1000 nm, preferably from 380 to 800 nm, more preferably from 400 to 600 nm, more preferably from 450 to 550 nm.

In some embodiments, the thermoplastic composition (P) comprises from 10 to 40% by weight, based on the total weight of the thermoplastic composition (P), of at least one graft copolymer (A-a) having a volume-average particle size (D₅₀) of from 70 to 300 nm, preferably from 80 to 250 nm, and from 0 to 35% by weight, based on the total weight of the thermoplastic composition (P), of at least one graft copolymer (A-b) having a volume-average particle size (D₅₀) of from 400 to 600 nm, preferably from 450 to 550 nm.

In some preferred embodiments, the thermoplastic composition (P) comprises from 15 to 30% by weight, based on the total weight of the thermoplastic composition (P) of at least one graft copolymer (A-a) having a volume-average particle size (D₅₀) of from 70 to 300 nm, preferably from 80 to 250 nm, and from 3 to 20% by weight, based on the total weight of the thermoplastic composition (P) of at least one graft copolymer (A-b) having a volume-average particle size (D₅₀) of from 400 to 600 nm, preferably from 450 to 550 nm.

The preparation of graft copolymer (A), as used in the invention may be e.g. carried out as follows:
For the preparation of a first graft base (A1-a), a first basic rubber latex (L-A1-a) may be obtained from (co)polymerizing the at least one alkyl (meth)acrylate monomer and one or more crosslinking agents (e.g., tricyclodecenyl acrylate) in an aqueous solution that may comprise further ingredients such as, e.g., one or more salts (e.g., C₁₂- to C₁₈- paraffin sulfonic acid and/or sodium bicarbonate). The temperature of the reaction may be, for example, in the range of from 55 to 70°C. In a preferred embodiment, a mass ratio of butyl acrylate : tricyclodecenyl acrylate in the range of from 10: 1 to 100 : 1, preferably of from 40 : 1 to 80 : 1, is used for polymerization. The mass ratios and definitions of the components are preferably as described herein.

For the preparation of a first graft copolymer (A-a), a first graft copolymer latex (L-A-a) may be obtained from (co)polymerizing a basic rubber latex (e.g., a first basic rubber latex (L-A1-a) obtainable as described before) with styrene and optionally acrylonitrile forming a first graft shell (A2-a) in an aqueous solution that may comprise further ingredients such as, e.g., one or more salts (e.g., sodium persulfate). The reaction temperature may be in the range of from 50 to 80°C. Optionally, the obtained graft copolymer (A-a) may be coagulated from the latex (L-A-a). Coagulation may be achieved in a salt solution (e.g., a magnesium sulfate solution) at a temperature in the range of from 50 to 80°C. Coagulation may optionally be followed by sintering (e.g., at a temperature in the range of from 80 to 150°C). The mass ratios and definitions of the components are preferably as described herein. More specific examples are also provided in the experimental section below.

For the preparation of a second graft base (A1-b), a second basic rubber latex (L-A1-b) may be obtained from (co)polymerizing butyl acrylate and one or more crosslinking agents (e.g., tricyclodecenyl acrylate) in the presence of a first basic rubber latex such as that described as (L-A1-a) above in an aqueous solution that may comprise further ingredients such as, e.g., one or more salts (e.g., sodium bicarbonate, sodium persulfate and/or C₁₂- to C₁₈-paraffin sulfonic acid). The temperature of the reaction may be, for example, in the range of from 55 to 70°C.

In a preferred embodiment, a mass ratio of butyl acrylate : tricyclodecenyl acrylate in the range of from 10 : 1 to 100 : 1, preferably of from 40 : 1 to 80 : 1, is used for polymerization. The mass ratios and definitions of the components are preferably as described herein. More specific examples are also provided in the experimental section below.

For the preparation of a second graft copolymer (A-b), a second graft rubber latex (L-A-b) may be obtained from (co)polymerizing a basic rubber latex (e.g., a second basic rubber latex (L-A1-b) obtainable as described before) with styrene and optionally acrylonitrile, forming graft shell (A2-b) in an aqueous solution that may comprise further ingredients such as, e.g., one or more salts (e.g., sodium persulfate). The reaction temperature may be in the range of from 50 to 80°C. Optionally, the obtained graft copolymer (A-b) may be coagulated from the latex (L-A-b). Coagulation may be achieved in a salt solution (e.g., a magnesium sulfate solution) at a temperature in the range of from 70 to 99°C. Coagulation may optionally be followed by sintering (e.g., at a temperature in the range of from 80 to 150°C). The mass ratios and definitions of the components are preferably as described herein. More specific examples are also provided in the experimental section below.

### Random Copolymer (B)

The thermoplastic composition (P) comprises 25 to 75% by weight, preferably 28 to 72% by weight, more preferably 30 to 70% by weight, more preferably 35 to 67% by weight, based on the total weight of the thermoplastic composition (P), of at least one random copolymer (B) comprising (or consisting of) at least one type of alkyl(meth)acrylate repeating units (B1) and at least one type of vinylaromatic repeating units (B2).

In the context of the present invention, a random copolymer is a polymer comprising at least two different types of repeating units, wherein essentially all repeating units are statistically arranged. A random copolymer in the context of the present invention is not a graft copolymer or a block copolymer.

In general, the at least one type of alkyl (meth)acrylate repeating units (B1) are present in an amount of 30 to 70% by weight, preferably 32 to 68% by weight, more preferably 35 to 65% by weight, more preferably 40 to 60% by weight, more preferably 42 to 50% by weight, particularly preferably 42 to 48% by weight, based on the total weight of the at least one random copolymer (B), and the at least one type of vinylaromatic repeating units (B2) are in general present in an amount of 30 to 70% by weight, preferably 32 to 68% by weight, more preferably 35 to 65% by weight, more preferably 40 to 60% by weight, more preferably 50 to 58% by weight, particularly preferably 52 to 58% by weight, based on the total weight of the at least one random copolymer (B).

In the random copolymer (B), the at least one alkyl (meth)acrylate repeating units (B1) are preferably C₁-C₈-alkyl (meth)acrylate repeating units, more preferably C₁-C₈-alkyl methacrylate repeating units, more preferably C₁-C₄-alkyl methacrylate repeating units, in particular methyl methacrylate repeating units. In preferred embodiments, at least 50% by weight, preferably at least 70% by weight, more preferably at least 90% by weight of the alkyl (meth)acrylate repeating units (B1) are methyl methacrylate. Particularly preferably, all alkyl (meth)acrylate repeating units (B1) are methyl methacrylate.

The vinylaromatic repeating units (B2) are preferably selected from styrene, alpha-methyl styrene, 2-methyl styrene, 3-methyl styrene, 4-methyl styrene, 2,4-dimethyl styrene, 2,5-dimethyl styrene, 2,6-dimethyl styrene and 2,4,6-trimethyl styrene repeating units, more preferably styrene or alpha-methyl styrene repeating units, more preferably styrene repeating units. In preferred embodiments, at least 50% by weight, preferably at least 70% by weight, more preferably at least 90% by weight of the vinylaromatic repeating units (B2) are styrene. Particularly preferably, all vinylaromatic repeating units (B2) are styrene.

In a preferred embodiment, the random copolymer (B) comprises (or consists of) 30 to 70% by weight, preferably 32 to 68% by weight, more preferably 35 to 65% by weight, more preferably 40 to 60% by weight, more preferably 42 to 50% by weight, based on the total weight of the at least one random copolymer (B), of methyl methacrylate and 30 to 70% by weight, preferably 32 to 68% by weight, more preferably 35 to 65% by weight, more preferably 40 to 60% by weight, more preferably 50 to 58%, based on the total weight of the at least one random copolymer (B), of styrene. Accordingly, preferred random copolymers (B) can be referred to as a styrene-methyl methacrylate copolymers or SMMA copolymers.

The amount of acrylonitrile repeating units in the random copolymer (B) is smaller than 5% by weight, based on the total weight of the copolymer (B). This is typically the case if no such repeating units can be detected by means of NMR spectroscopy. Preferably, the amount of acrylonitrile repeating units is smaller than 2% by weight.

More preferably, the random copolymer (B) does not contain any acrylonitrile repeating units. Even more preferably, the random copolymer (B) does not contain any cyanide group-containing monomers.

Optionally, the random copolymer (B) according to the present invention may also contain one or more cross-linking moiety/moieties such as, e.g., divinylbenzene or vinyl acrylate units, in its polymer strand. Preferably, such cross-linking agents do constitute for not more than 25% by weight, more preferably not more than 10% by weight, often not more than 5% by weight, based on the total weight of random copolymer (B). Particularly preferably, the random copolymer (B) does not contain any cross-linking moieties. More preferably, the random copolymer (B) does not contain any repeating units other than the alkyl (meth)acrylate repeating units (B1) and the vinylaromatic repeating units (B2). Furthermore, the random copolymer (B) is preferably not grafted or otherwise bound to rubber polymers.

The random copolymer (B) according to the present invention may bear a linear, circular or branched structure. A circular structure is a copolymer strand wherein both ends are connected with another. The term "branched structure" may be understood in the broadest sense as any structure deviating from a plain linear or circular structure. Accordingly, in a polymer of branched structure, there is at least one repeating unit binding to three or more other repeating units. Preferably, the random copolymer (B) used in the present invention is an essentially linear or circular copolymer, more preferably an essentially linear copolymer, in particular a linear random copolymer.

Preferably, the melt flow index (MFI) (determined at a temperature of 200°C and at a load of 5 kg according to ASTM procedure D1238) of the random copolymer (B) according to the present invention is less than 50 g/10 min, more preferably less than 20 g/10 min, more preferably of less than 10 g/10 min, often less than 5 g/10 min. Preferably, the ASTM procedure D1238 is used in the version of the year 2013.

In general, random copolymer (B) used in the present invention may be obtained by any means suitable therefore known in the art. The person skilled in the art knows numerous methods suitable for obtaining such random copolymer (B). Well-known conventional polymerization procedures may be employed in the preparation of such random copolymer (B). Random copolymer (B) is e.g. obtained in a known manner by bulk, solution, suspension, precipitation or emulsion polymerization. Details of these processes are described, for example, in Kunststoffhandbuch, ed. R. Vieweg and G. Daumiller, Vol. V "Polystyrol", Carl-Hanser-Verlag Munich, 1969, p. 118 ff.

For example, the random copolymer (B) may be prepared by emulsion polymerization, solution polymerization or bulk polymerization. Preferably, heat or radical initiation may be used (including living polymerization methods).

Alkyl (meth)acrylate monomers (B1) useful for the preparation of random copolymer (B) as well as numerous vinylaromatic monomers (B2) are commercially available. Others can be easily obtained by standard chemical processes.

Copolymerization for the preparation of random copolymer (B) may optionally be carried out in the presence of, e.g., one or more solvent(s) and/or one or more initiator(s) (e.g., one or more radical starter(s)).

For example, initiation of copolymerization may be started by thermal decomposition of an initiator (e.g an organic peroxide (e.g., dicumyl peroxide) or an azo compound), photolysis (e.g., with metal iodides, metal alkyls or azo compounds (e.g., azoisobutylnitrile (AIBN)), a peroxide initiator (e.g., benzoyl peroxide), an initiator composition enabling a redox reaction (e.g., reduction of hydrogen peroxide or an alkyl hydrogen peroxide by means of iron ions or other reductants such as, e.g, Cr²⁺, V²⁺, Ti³⁺, Co²⁺ or Cu⁺), persulfate activation, ionizing radiation (e.g., by means of α-, β-, γ- or x-rays), electrochemical activation, plasma activation, sonication (e.g., at around 16 kHz) or a ternary Initiator (e.g., benzoyl peroxide-3,6-bis(o-carboxybenzoyl)-N-isopropylcarbazole-di-η5-indenyl-zicronium dichloride optionally in combination with a metallocene (e.g., indenylzirconium) and/or a peroxide (e.g., benzoyl peroxide).

In a preferred embodiment, the copolymerization comprises heating of the reaction mixture comprising the alkyl (meth)acrylate monomers (B1) and vinylaromatic monomers (B2) above a temperature above 100°C and/or adding one or more polymerization initiator(s) to said reaction mixture.

The reaction mixture can be maintained or brought to conditions allowing chain elongation of the polymer. For instance, the temperature is set according to the monomer/copolymer content of the reaction mixture. For example, the temperature may optionally also be varied during incubation, such as, e.g., constantly or stepwise increased during the polymerization process.

Methods for producing a random copolymer (B) as used in the present invention may be conducted as shown in any of GB 464688, GB 531956, GB 863279 and WO 2003/051973.

### Optional copolymer (C)

The thermoplastic composition (P) optionally comprises 0 to 50% by weight, preferably 0 to 30% by weight, more preferably 0 to 28% by weight, more preferably 0 to 26% by weight, based on the total weight of the thermoplastic composition (P), of at least one copolymer (C) comprising (or consisting of) at least one type of vinyl cyanide repeating units (C1) and at least one type of vinylaromatic repeating units (C2). If copolymer (C) is present, it is typically present in an amount of at least 1% by weight, preferably at least 5% by weight, more preferably at least 10% by weight, more preferably at least 20% by weight.

In general, if the at least one copolymer (C) is present, the at least one type of vinyl cyanide repeating units (C1) are present in an amount of from 15 to 45% by weight, preferably from 20 to 40% by weight, more preferably from 25 to 35% by weight, based on the total weight of copolymer (C), and the at least one type of vinylaromatic repeating units (C2) are present in an amount of from 55 to 85% by weight, preferably 60 to 80% by weight, more preferably 65 to 75% by weight, based on the total weight of copolymer (C).

Optionally, the copolymer (C) may contain further repeating units (C3) of monomers copolymerizable with the vinyl cyanide monomers (C1) and the vinylaromatic monomers (C2), in amounts of up to 30% by weight, preferably up to 20% by weight, more preferably up to 10% by weight, based on the total weight of copolymer (C). If the further repeating units (C3) are present, their amount is preferably at least 1% by weight, more preferably at least 3% by weight, more preferably at least 5% by weight, based on the total weight of copolymer (C). However, preferably no further repeating units (C3) are present in the copolymer (C).

The vinyl cyanide repeating units (C1), are preferably selected from methacrylonitrile and acrylonitrile, more preferably acrylonitrile repeating units. In preferred embodiments, at least 50% by weight, preferably at least 70% by weight, more preferably at least 90% by weight of the vinyl cyanide repeating units (C1) are acrylonitrile. Particularly preferably, all vinyl cyanide repeating units (C1) are acrylonitrile.

The vinylaromatic repeating units (C2) are preferably selected from styrene, alpha-methyl styrene, 2-methyl styrene, 3-methyl styrene, 4-methyl styrene, 2,4-dimethyl styrene, 2,5-dimethyl styrene, 2,6-dimethyl styrene and 2,4,6-trimethyl styrene repeating units, more preferably styrene or alpha-methyl styrene repeating units, more preferably styrene repeating units. In preferred embodiments, at least 50% by weight, preferably at least 70% by weight, more preferably at least 90% by weight of the vinylaromatic repeating units (C2) are styrene. Particularly preferably, all vinylaromatic repeating units (C2) are styrene.

The further repeating units (C3), if present, may be obtained from any monomer copolymerizable with the vinyl cyanide monomers (C1) and the vinylaromatic monomers (C2). For example, the further repeating units (C3) may be selected from alkyl (meth)acrylate repeating units and (meth)acrylic acid repeating units or salts thereof, preferably C₁-C₈ alkyl (meth)acrylate repeating units, more preferably from C₁-C₈ methacrylate repeating units, more preferably methyl methacrylate repeating units. However, preferably no further repeating units (C3) are present.

The copolymer (C) may be a random copolymer or a block copolymer, however preferably is a random copolymer. The copolymer (C) comprising or consisting of acrylonitrile and styrene repeating units may also be designated as poly(styrene-acrylonitrile) (SAN). The copolymer (C) that comprises or consists of acrylonitrile and α-methyl styrene may also be designated as poly(α-methyl styrene/acrylonitrile) (AMSAN).

In the context of the present invention, a block copolymer is a polymer comprising at least two different types of repeating units, wherein the repeating units are arranged in blocks, wherein each block is essentially composed of the same type of repeating units, and two adjacent blocks are composed of different types of repeating units. A block copolymer in the context of the present invention is not a graft copolymer or a random copolymer.

The weight average molecular weight (as determined by gel permeation chromatography relative to polystyrene as standard) of the copolymer (C) may be e.g. in the range of 15,000 to 200,000 g/mol, preferably in the range of 30,000 to 150,000 g/mol.

Among the afore-mentioned copolymers (C) those having a viscosity number VN (determined according to DIN 53726 at 25°C, 0.5% by weight in dimethylformamide) of from 50 to 120 ml/g are preferred.

As used herein, as far as not otherwise defined, all measurement norms such as, e.g., DIN norms and ASTM norms, preferably refer to the version that was up-to-date in August 2021.

The copolymers (C), especially SAN or AMSAN copolymers are known and the methods for their preparation, for instance, by radical polymerization, more particularly by emulsion, suspension, solution and bulk polymerization, are also well documented in the literature.

### Optional Additives (D)

The thermoplastic composition (P) optionally comprises up to 2% by weight, preferably 0.01 to 1.5% by weight, more preferably 0.02 to 1% by weight, based on the total weight of the thermoplastic composition (P), of at least one additive (D) selected from UV absorbers, light stabilizers and antioxidants.

The optional additives (D) may be provided as such or as a mixture with other components, e.g. as one or more masterbatches. Preferably the optional additives (D) are provided as masterbatches of the respective additive (D) in a carrier, e.g. a polymeric carrier. More preferably, the optional additives (D) are provided as a masterbatch of the respective additive (D) in one or more of the polymeric components (A), (B) or, if present, (C). When the optional additives (D) are provided as masterbatches, the amounts of additives specified herein, based on the total weight of the thermoplastic composition (P) refer to the amounts of the respective additives as such. Accordingly, the amount of the polymeric carrier in the masterbatch accounts to the amount of the respective polymeric component (A), (B) or, if present, (C), or is considered a further component.

When the optional additives (D) are provided as masterbatches, the concentration of an additive (D) in the respective masterbatch is preferably in a range of from 1 to 90% by weight, more preferably from 10 to 80% by weight, more preferably from 20 to 60% by weight, more preferably from 30 to 50% by weight, based on the total weight of the masterbatch.

The total amount of UV absorbers and light stabilizers, if present in the at least one additive (D), is preferably from 0.1 to 1.9% by weight, more preferably from 0.11 to 1.4% by weight, more preferably from 0.12 to 0.9% by weight, often from 0.13 to 0.8% by weight, often from 0.16 to 0.5% by weight, based on the total weight of the thermoplastic composition (P).

UV absorbers, if present in the at least one additive (D), are preferably organic UV absorbers, more preferably from the group consisting of substituted benzotriazoles, substituted benzophenones, substituted triazines, oxalanilides, substituted resorcinols, salicylates and cyanoacrylates, more preferably from the group consisting of 2-(2-hydroxyphenyl) benzotriazoles, 2-hydroxy-benzophenones, hydroxyphenyl-s-triazines and oxalanilides, in particular benzotriazoles. The amount of these UV absorbers, if present, is preferably from 0.05 to 0.45% by weight, more preferably from 0.06 to 0.4% by weight, more preferably from 0.08 to 0.25% by weight, based on the total weight of the thermoplastic composition (P).

Light stabilizers, if present in the at least one additive (D), are preferably hindered amine light stabilizers (HALS), more preferably derivatives of 2,2,6,6-tetramethylpiperidine, more preferably derivatives of 2,2,6,6-tetramethyl-4-piperidyl-substituted organic compounds.

Suitable hindered amine light stabilizers are, e.g., bis(2,2,6,6-tetramethylpiperidin-4-yl) sebacate (Tinuvin^{®} 770 by BASF SE); bis(1,2,2,6,6-pentamethyl-4-piperidyl) sebacate (Tinuvin^{®} 765 by BASF SE); N,N'-bisformyl-N,N'-bis-(2,2,6,6-tetramethyl-4-piperidinyl)-hexamethylendiamine (Uvinul^{®} 4050 H by BASF SE); N,N'-bis(2,2,6,6-tetramethyl-4-piperidyl)isophthalamide (Nylostab^{®} S-EED^{®} by Clariant); 2,2,6,6-tetramethyl-4-piperidinyl stearate (Cyasorb^{®} UV-3853 by Solvay); and sterically hindered amine with the CAS Registry number 71878-19-8 (Chimassorb^{®} 944 by BASF SE).

If present, the hindered amine light stabilizer is preferably a derivative of bis(2,2,6,6-tetramethyl-4-piperidyl)dicarboxylic acid diesters, in particular bis(2,2,6,6-tetramethyl-4-piperidyl)sebacate.

The amount of these light stabilizers, if present, is preferably from 0.05% to 0.45% by weight, more preferably from 0.06 to 0.4% by weight, more preferably from 0.08 to 0.25% by weight, based on the total weight of the thermoplastic composition (P).

In some embodiments, the thermoplastic composition (P) comprises from 0.05% to 0.45% by weight, more preferably from 0.06 to 0.4% by weight, more preferably from 0.08 to 0.25% by weight, based on the total weight of the thermoplastic composition (P), of UV absorbers from the group consisting of substituted benzotriazoles, substituted benzophenones, substituted triazines, oxalanilides, substituted resorcinols, salicylates and cyanoacrylates, more preferably from the group consisting of 2-(2-hydroxyphenyl) benzotriazoles, 2-hydroxy-benzophenones, hydroxyphenyl-s-triazines and oxalanilides, in particular benzotriazoles, and from 0.05% to 0.45% by weight, more preferably from 0.06 to 0.4% by weight, more preferably from 0.08 to 0.25% by weight, based on the total weight of the thermoplastic composition (P), of hindered amine light stabilizers selected from derivatives of bis(2,2,6,6-tetramethyl-4-piperidyl)dicarboxylic acid diesters, in particular bis(2,2,6,6-tetramethyl-4-piperidyl)sebacate.

In some applications, wherein weathering stability is of minor relevance, the thermoplastic composition (P) does not contain any UV absorbers or light stabilizers.

Antioxidants, if present in the at least one additive (D), are preferably compounds selected from monophosphite-based antioxidants, diphosphite-based antioxidants and sterically hindered phenolic antioxidants. If one or more antioxidants are present, they are preferably selected from monophosphite-based antioxidants, such as trisubstituted monophosphite derivatives, diphosphite-based antioxidants, such as substituted pentae-rythrirol diphosphite derivatives and sterically hindered phenolic antioxidants, such as 2,6-di-tertbutylphenolic derivatives. More preferably, antioxidants are one or more compounds selected from tri-phenyl substituted monophosphite de-rivatives, di-phenyl substituted pentaerythritol diphosphite derivatives and mono-substituted 2,6-di-tert-bu-tylphenolic derivatives. More preferably, the antioxidants are one or more of tris(2,4-di-tert-butylphenyl)phosphite, bis(2,4-di-tert-butylphenyl)pentaerythritol diphosphite and octa-decyl-3-[3,5-di-tert-butyl-4-hydroxyphenyl]propionate.

The amount of antioxidants, if present, is preferably from 0.01 to 0.5% by weight, more preferably from 0.02 to 0.2% by weight, more preferably from 0.03 to 0.17% by weight, more preferably from 0.05 to 0.15% by weight, based on the total weight of the thermoplastic composition (P).

In some embodiments, the thermoplastic composition (P) does not contain any antioxidants.

In some embodiments, the thermoplastic composition (P) contains a combination of UV absorbers, light stabilizers and antioxidants as described above as additives (D), in the amounts disclosed above. In other embodiments, none of UV absorbers, light stabilizers and antioxidants are present in the thermoplastic composition (P). In yet other embodiments, only antioxidants are present in the thermoplastic composition (P) as additives (D), in the amounts specified above.

### Optional Colorants (E)

In embodiments, wherein the thermoplastic composition (P) is required to be colored, it is necessary that the thermoplastic composition contains pigments and/or dyes as colorants (E).

Therefore, the thermoplastic composition (P) optionally comprises up to 5% by weight, preferably 0.01 to 3% by weight, more preferably 0.02 to 2% by weight, more preferably 0.05 to 1% by weight, based on the total weight of the thermoplastic composition (P), of at least one colorant (E) selected from pigments and dyes.

The optional colorants (E) may be provided as such or as a mixture with other components, e.g. as one or more masterbatches. Preferably the optional colorants (E) are provided as masterbatches of the respective colorant (E) in a carrier, e.g. a polymeric carrier. More preferably, the optional colorants (E) are provided as a masterbatch of the respective colorant (E) in one or more of the polymeric components (A), (B) or, if present, (C). When the optional colorants (E) are provided as masterbatches, the amounts of colorants specified herein, based on the total weight of the thermoplastic composition (P) refer to the amounts of the respective colorants as such. Accordingly, the amount of the polymeric carrier in the masterbatch accounts to the amount of the respective polymeric component (A), (B) or, if present, (C), or is considered a further component.

When the optional colorants (E) are provided as masterbatches, the concentration of a colorant (E) in the respective masterbatch is preferably in a range of from 1 to 90% by weight, more preferably from 10 to 80% by weight, more preferably from 20 to 60% by weight, more preferably from 30 to 50% by weight, based on the total weight of the masterbatch.

In some applications, thermoplastic compositions are required to be colored, while still being partially translucent; i.e., these colored thermoplastic compositions allow visible light of certain wavelengths to pass through, while absorbing light of other wavelengths. This is the case, e.g. in back-light automotive parts.

For these applications, the total amount of colorants (E) is typically less than 2% by weight, based on the total weight of the thermoplastic composition (P), and the colorants (E) do not contain carbon black. Preferably, the total amount of colorants (E) in this case is 0.01 to 1.5% by weight, preferably 0.02 to 1% by weight, more preferably 0.05 to 0.5% by weight, based on the total weight of the thermoplastic composition (P). Furthermore, in this case, the thermoplastic composition preferably contains a single colorant (E), more preferably, a single dye.

For other applications, thermoplastic compositions and articles prepared therefrom are colored, e.g. for aesthetic reasons, with dark colors being particularly popular in many applications, e.g. in automotive industry, electronic industry or for household goods. In such applications, the thermoplastic compositions are typically opaque.

It was found that colored thermoplastic compositions (P) are often perceived as darker, compared with respective compositions, wherein a random copolymer (B) is absent. Particularly dark thermoplastic compositions (P) can be obtained, if they contain carbon black as at least one colorant (E) and/or at least 1% by weight, preferably at least 1.5% by weight, more preferably at least 2% by weight of colorants (E), based on the total weight of the thermoplastic composition (P).

Pigments, if present in the at least one colorant (E), may be any pigments suitable for coloring thermoplastic compositions (P). For example, pigments may be organic or inorganic. Preferable pigments are selected from phthalocyanines, ultramarine blue, iron oxides and carbon black, and also the entire class of organic pigments. Carbon black is a preferred pigment, when dark (e.g. deep black) compositions are required. Suitable carbon black may e.g. have a volume average primary particle size D₅₀ (measured by laser diffraction) of from 5 to 100 nm, more preferably from 7 to 60 nm. Furthermore, suitable carbon black may have a carbon content of more than 95%, and a specific surface area of greater than 100 m²/g. Two examples of typical commercially available products are Black Pearls 880 (Cabot Corperation), which can be used in the examples, or Printex 90 (Orion Engineered Car-bons GmbH).

In preferred dark thermoplastic compositions (P), the amount of pigments, preferably carbon black, in the at least one colorant (E), if present, is preferably from 0.01 to 2% by weight, more preferably from 0.02 to 1% by weight, more preferably from 0.1 to 0.5% by weight, based on the total weight of the thermoplastic composition (P). When dyes are present together with carbon black, it is often preferable that the amount of carbon black does not exceed 0.5% by weight, more preferably 0.3% by weight, more preferably 0.2% by weight, based on the total weight of the thermoplastic composition.

Dyes, if present in the at least one colorant (E), may be any dyes suitable for coloring thermoplastic compositions. For example, the dyes, which are soluble in the thermoplastic composition (P) may be selected from red dyes, green dyes, blue dyes, yellow dyes, magenta dyes, cyan dyes or any other color of dyes. Suitable dyes include, among others, Solvent Green, e.g. Solvent Green 3, Solvent Red, e,g, Solvent Red 179, Solvent Yellow, e.g. Solvent Yellow 93. In dark thermoplastic compositions (P), if dyes are present, preferably a combination of at least two dyes of different, in particular complementary color families is used as colorants (E).

When a combination of at least two dyes is used, one dye, soluble in the thermoplastic molding, can be a dye or a combination of dyes having any color (e.g. green). The further dye, should be from a different color family, in particular a complementary color (e.g. reddish shades as complementary to green color). Often, three different dye components are used. In one embodiment, the dyes comprise the commercial product Solvent Green 3. In one embodiment, the dyes comprise Solvent red 179. Also the commercial product Solvent Yellow 93 can be used, (see 4-[(1,5-Dihydro-3-methyl-5-oxo-1-phenyl-4H-pyrazol-4-ylidene)methyl]-2,4-dihydro-5-methyl-2-phenyl-3H-pyrazol-3-one).

The amount of dyes, if present, is preferably from 0.1 to 2% by weight, more preferably from 0.2 to 1.5% by weight, more preferably from 0.5 to 1% by weight, based on the total weight of the thermoplastic composition (P).

In preferred dark thermoplastic compositions, the at least one colorant (E) is a combination of at least two dyes of different color, preferably a combination of carbon black and at least two dyes of different color. In some preferred embodiments, the thermoplastic composition (P) comprises 0.01 to 0.5% by weight, preferably from 0.02 to 0.3% by weight, more preferably from 0.1 to 0.2% by weight, based on the total weight of the thermoplastic composition (P), of carbon black, and from 0.1 to 1.5% by weight, preferably 0.2 to 1% by weight, more preferably 0.3 to 0.5% by weight, based on the total weight of the thermoplastic composition (P), of at least two dyes, preferably selected from a red dye and a green dye, more preferably Solvent Red 179 and Solvent Green 3.

In embodiments, wherein the thermoplastic composition (P) does not contain any colorants (E), the luminous transmittance (as measured according to ASTM D1003 - 21 using CIE illuminant C at a material thickness of 3 mm) of the thermoplastic composition (P) is typically 13% or more, preferably 15% or more, more preferably 18% or more, more preferably 20% or more. It will be understood by those skilled in the art that at lower material thicknesses, the luminous transmittance of the thermoplastic composition (P) will be even higher. For example, at thicknesses of 2 mm, the luminous transmittance of the thermoplastic composition (P) often is 25% or more, preferably 28% or more, more preferably 30% or more, more preferably 32% or more. Therefore, in some preferred embodiments, the thermoplastic composition (P) does not contain any colorants. In some other embodiments, the thermoplastic composition (P) does not contain any UV absorbers or light stabilizers as additives (D) and does not contain any colorants (E).

In other embodiments, the thermoplastic composition (P) does not contain any additives (D) and does not contain any colorants (E). In yet other embodiments, the thermoplastic composition (P) consists of components (A), (B) and (C).

It will be understood, that colorants (E) will reduce the luminous transmittance of a thermoplastic composition with respect to its natural state. However, although not generally applicable, in some cases, certain additives (D) may also affect the luminous transmission of a thermoplastic composition. Therefore, for some partially light transmitting colored or UV stabilized applications, the combined amount of additives (D) and colorants (E) in total preferably does not exceed 2% by weight, preferably 1.8% by weight, more preferably 1.5% by weight, more preferably 1% by weight, based on the total weight of the thermoplastic composition (P). At these concentrations, typically the thermoplastic composition (P) still partially allows visible light to pass through, especially at low thicknesses, which is useful, e.g. in colored light transmitting applications and/or outdoor applications, such as back-light automotive parts.

### Optional Further Components

The thermoplastic composition (P) may optionally comprise further components different from the at least one graft copolymer (A), the at least one random copolymer (B), the at least one copolymer (C) and the at least one additive (D). For Example, the further components may be selected from further polymeric components and further additives.

If any further polymeric components are present in the thermoplastic composition (P), they preferably do not comprise any further graft copolymers apart from the at least one graft copolymer (A), do not comprise any random copolymers of alkyl(meth)acrylate monomers and vinylaromatic monomers apart from the at least one random copolymer (B), and do not comprise any copolymers of vinyl cyanide monomers and vinylaromatic monomers apart from copolymer (C). If any further additives are present in the thermoplastic composition (P), they are not selected from UV absorbers, light stabilizers, antioxidants, pigments or dyes.

Exemplary further polymeric components are polyesters, polyethers, polycarbonates, polyamides, styrene homopolymers and phenol formaldehyde resins. Preferably, the thermoplastic composition (P) does not contain any further polymeric components. Further polymeric components also include polyester modified polysiloxanes, in particular polyester-polysiloxane-block copolymers, preferably [polyester-b-polysiloxane-b-polyester] triblock copolymers. Preferred examples of the polysiloxane moieties comprised in the polyester-polysiloxane-blockcopolymer are derived from poly(dimethylsiloxane), poly(diethylsiloxane), poly(dipropylsiloxane), poly(dibutylsiloxane), and mixtures thereof.

Examples of further additives include, for example, antistatic agents, flame retardants, stabilizers for improving thermal stability, stabilizers for enhancing hydrolysis resistance and chemical resistance, anti-thermal decomposition agents and in particular lubricants that are useful for production of molded bodies/articles.

Examples of suitable antistatic agents include amine derivatives such as N,N-bis(hydroxyalkyl)alkylamines or -alkyleneamines, polyethylene glycol esters, copolymers of ethylene oxide glycol and propylene oxide glycol (in particular two-block or three-block copolymers of ethylene oxide blocks and propylene oxide blocks), and glycerol mono- and distearates, and mixtures thereof.

Examples of suitable flame retardants that may be used include the halogen-containing or phosphorus-containing compounds known to the person skilled in the art, magnesium hydroxide, and also other commonly used compounds, or mixtures thereof.

Suitable matting agents include not only inorganic substances such as talc, glass beads or metal carbonates (for example MgCO₃, CaCO₃) but also polymer particles, in particular spherical particles having diameters D₅₀ greater than 1 µm, based on, for example, methyl methacrylate, styrene compounds, acrylonitrile or mixtures thereof. It is further also possible to use polymers comprising copolymerized acidic and/or basic monomers.

Examples of suitable antidrip agents include polytetrafluoroethylene (Teflon) polymers and ultrahigh molecular weight polystyrene (weight-average molar mass Mw above 2,000,000 g/mol).

Examples of fibrous/pulverulent fillers include carbon or glass fibers in the form of glass fabrics, glass mats, or filament glass rovings, chopped glass, glass beads, and wollastonite, particular preference being given to glass fibers. When glass fibers are used, they may be finished with a sizing and a coupling agent to improve compatibility with the blend components. The glass fibers incorporated may either take the form of short glass fibers or else continuous filaments (rovings).

Examples of suitable particulate fillers include carbon black, amorphous silica, magnesium carbonate, powdered quartz, mica, bentonites, talc, feldspar or, in particular, calcium silicates, such as wollastonite, and kaolin.

Other suitable compounds include, for example, thiocarboxylic esters. Also usable are C₆-C₂₀ alkyl esters of thiopropionic acid, in particular the stearyl esters and lauryl esters.

It is also possible to use the dilauryl ester of thiodipropionic acid (dilauryl thiodipropionate), the distearyl ester of thiodipropionic acid (distearyl thiodipropionate) or mixtures thereof.

Suitable lubricants and demolding agents include stearic acids, stearyl alcohol, stearic esters, polyolefin waxes and/or generally higher fatty acids, derivatives thereof and corresponding fatty acid mixtures comprising 1 to 45 carbon atoms. In a further preferred embodiment, the composition comprises amide compounds having the formula R¹-CONH-R², wherein R¹ and R² are each independently selected from aliphatic, saturated or unsaturated hydrocarbon groups having 1 to 30 carbon atoms, preferably 12 to 24 carbon atoms, in particular 16 to 20 carbon atoms. In a further preferred embodiment of the invention, the composition may additionally comprise fatty acid ester compounds having the formula R³-CO-OR⁴, wherein R³ and R⁴ are each independently selected from aliphatic, saturated or unsaturated hydrocarbon groups having 1 to 45 carbon atoms, preferably 15 to 40 carbon atoms, in particular 25 to 35 carbon atoms. Also particularly suitable is ethylene-bis(stearamide).

Further additives also include organic, inorganic or mixed phosphate, in particular an alkaline metal or earth alkaline metal phosphate such as Ca₃(PO₄)₂ and/or an organophosphate having alkyl or aryl groups comprising 1 to 12 carbon atoms.

These further components may be admixed at any stage of the manufacturing operation, but preferably at an early stage in order to profit early on from the effects of the respective further component.

The optional further components may be provided as such or as a mixture with other components, e.g. as one or more masterbatches. Preferably the optional further components are provided as masterbatches in a carrier, e.g. a polymeric carrier. More preferably, the optional further components are provided as a masterbatch in one or more of the polymeric components (A), (B) or, if present, (C). When the optional further components are provided as masterbatches, the amounts of further components, based on the total weight of the thermoplastic composition (P) refer to the amounts of the respective further components as such. Accordingly, the amount of the polymeric carrier in the masterbatch accounts to the amount of the respective polymeric component (A), (B) or, if present, (C), or is considered a further component.

When the optional further components are provided as masterbatches, its concentration in the respective masterbatch is preferably in a range of from 1 to 90% by weight, more preferably from 10 to 80% by weight, more preferably from 20 to 60% by weight, more preferably from 30 to 50% by weight, based on the total weight of the masterbatch.

Preferably, the thermoplastic composition (P) comprises at least one lubricant, more preferably at least one wax, more preferably at least one wax selected from amide waxes, such as ethylene bis(stearamide). If lubricants are present in the thermoplastic composition (P), their amount is preferably in the range of from 0.0001 to 1% by weight, preferably from 0.0005 to 0.5% by weight, more preferably from 0.001 to 0.1% by weight, more preferably from 0.005 to 0.05% by weight, more preferably from 0.008 to 0.03% by weight, more preferably from 0.01 to 0.02% by weight, based on the total weight of the thermoplastic composition (P).

In some preferred embodiments, the thermoplastic composition (P) does not comprise any further components except for the at least one graft copolymer (A), the at least one random copolymer (B), optionally the at least one copolymer (C), optionally the at least one additive (D), and optionally the at least one colorant (E).

In other preferred embodiments, the thermoplastic composition (P) does not comprise any further components except for the at least one graft copolymer (A), the at least one random copolymer (B), optionally the at least one copolymer (C), optionally the at least one additive (D), optionally the at least one colorant (E), and optionally at least one lubricant, preferably ethylene bis(stearamide).

Another aspect of the present invention is a process for the preparation of a thermoplastic composition (P), in particular the thermoplastic composition (P) as described above, comprising the steps of:
i) providing at least following components:
   a) 25 to 45% by weight, preferably 28 to 42% by weight, based on the total weight of components provided, of at least one graft copolymer (A) comprising:
      a1) a graft base (A1) comprising at least one alkyl (meth)acrylate-based rubber, preferably butyl acrylate-based rubber; and
      a2) a graft shell (A2) comprising at least one type of vinylaromatic repeating units, preferably styrene, and optionally at least one type of vinyl cyanide repeating units, preferably acrylonitrile;
   b) 25 to 75% by weight, preferably 28 to 72% by weight, based on the total weight of components provided, of at least one random copolymer (B), different from (A), comprising:
      b1) 30 to 70% by weight, based on the total weight of the copolymer (B) of at least one type of alkyl(meth)acrylate repeating units (B1), preferably methyl methacrylate repeating units; and
      b2) 30 to 70% by weight, based on the total weight of the copolymer (B) of at least one type of vinylaromatic repeating units (B2), preferably styrene repeating units;
   c) 0 to 50% by weight, preferably 0 to 30% by weight, based on the total weight of components provided, of at least one copolymer (C), different from (A) and (B), comprising:
      c1) 15 to 45% by weight, based on the total weight of the copolymer (C), of at least one type of vinyl cyanide repeating units (C1), preferably acrylonitrile repeating units; and
      c2) 55 to 85% by weight, based on the total weight of the copolymer (C), of at least one type of vinylaromatic repeating units (C2), preferably styrene repeating units;
   d) 0 to 2% by weight, preferably 0.01 to 1.5% by weight, more preferably 0.02 to 1% by weight, based on the total weight of components provided, of at least one additive (D) selected from UV absorbers, light stabilizers and antioxidants; and
   e) 0 to 5% by weight, preferably 0.01 to 3% by weight, more prferably 0.02 to 2% by weight, more preferably 0.05 to 1% by weight, based on the total weight of components provided, of at least one colorant (E) selected from pigments and dyes.
ii) blending the components provided in step i) to form a thermoplastic composition (P),
with the proviso that no homopolymers of methyl methacrylate are used in the process, and the amount of acrylonitrile repeating units in the random copolymer (B) is smaller than 5% by weight, based on the total weight of the copolymer (B).

The components provided in step i) are preferably defined as the components of the thermoplastic composition described above. Preferably, only the at least one graft copolymer (A), the at least one random copolymer (B), the at least one copolymer (C), if present, the at least one additive (D), if present and polymeric, and the at least one colorant (E), if present and polymeric, are provided as polymeric components in step i). More preferably, only the at least one graft copolymer (A), the at least one random copolymer (B), optionally the at least one copolymer (C), optionally the at least one additive (D) and optionally the at least one colorant (E) are provided in step i).

Each of components (A) to (E) - as far as solid - may be provided in form of particulate materials having different particle sizes and particle size distributions (e.g., as pellets, granules and/or powders).

The particulate materials (A) to (E) may be provided to a mixing device in the required amounts and ratios as previously indicated and optionally mixed prior to the blending step (ii) in order to obtain a homogenous particulate material mixture. In a preferred embodiment, this may require 1 to 60, preferably 1 to 20, in particular 2 to 10 minutes, depending to the amount of particulate material to be mixed.

In step ii), the thus obtained homogenous particulate material mixture is then transferred to an optionally heatable mixing apparatus and blended therein, producing a substantially liquid-melt polymer mixture.

"Substantially liquid-melt" means that the polymer mixture, as well as the predominant liquid-melt (softened) fraction, may further comprise a certain fraction of solid constituents, examples being unmelted fillers and reinforcing material such as glass fibers, metal flakes, or else unmelted pigments, colorants, etc. "Liquid-melt" means that the polymer mixture is at least of low fluidity, therefore having softened at least to an extent that it has plastic properties.

Mixing apparatuses used are those known by the person skilled in the art. Components (A) and (B), and - where included - (C), (D) and/or (E) may be mixed, for example, by joint extrusion, kneading, or rolling, the aforementioned components.

Examples of mixing apparatus for implementing the method include discontinuously operating, heated internal kneading devices with or without RAM, continuously operating kneaders, such as continuous internal kneaders, screw kneaders with axially oscillating screws, Banbury kneaders, furthermore extruders, and also roll mills, mixing roll mills with heated rollers, and calenders.

Optionally, the method may comprise a further step (iii) of cooling the blend obtained from step (ii) to temperatures below the glass transition point of the components (A) to (E) to obtain the molding composition (P).

A preferred mixing apparatus used is an extruder or a kneader. Particularly suitable for melt extrusion are, for example, single-screw or twin-screw extruders. A twin-screw extruder is preferred. In some cases, the mechanical energy introduced by the mixing apparatus in the course of mixing is enough to cause the mixture to melt, meaning that the mixing apparatus does not have to be heated. Otherwise, the mixing apparatus is generally heated.

The temperature is guided by the chemical and physical properties of the styrene-based polymer component (A) and the components (B), (C), (D) and (E), and should be selected such as to result in a substantially liquid-melt polymer mixture. On the other hand, the temperature is not to be unnecessarily high, in order to prevent thermal damage of the polymer mixture. The mechanical energy introduced may, however, also be high enough that the mixing apparatus may even require cooling. Preferably, the mixing apparatus is operated customarily at 150 to 400, more preferably 170 to 300°C.

In a preferred embodiment, a heatable twin-screw extruder is used and a speed of 50 to 150 rpm, preferably 60 to 100 rpm is employed. In a preferred embodiment, an extruding temperature of 170 to 270°C, preferably 210 to 250°C is employed to obtain the thermoplastic composition (P). The thermoplastic composition (P) may be directly used, e.g. in molding processes, preferably injection molding processes, or may be processed to form granules which may be subjected to molding processes afterwards. The molding processes are preferably carried out at temperatures of 170 to 270°C, in particular 210 to 250°C to result in a molded article.

Processing may be carried out using the known processes for thermoplastic processing, in particular production may be effected by thermoforming, extruding, injection molding, calendaring, blow molding, compression molding, press sintering, deep drawing or sintering, preferably by injection molding.

If in step i) no colorants (E) are provided, the process of the invention generally results in a thermoplastic resin composition (P) having a luminous transmittance, measured according to ASTM D1003 - 21 using CIE illuminant C, of 13.0% or greater at a thickness of 3 mm. Therefore, in some preferred embodiments, the process of the invention is a process for the preparation of a thermoplastic composition (P) having a luminous transmittance, measured according to ASTM D1003 - 21 using CIE illuminant C, of 13.0% or greater, preferably 15% or greater, more preferably 18% or greater, more preferably 20% or greater at a thickness of 3 mm, wherein the amount of colorants (E) is 0% by weight, based on the total weight of components provided.

If in step i) the optional colorant (E) is provided, the process of the invention results in a colored thermoplastic composition (P) as described above. Therefore, in some preferred embodiments, the process of the invention is a process for the preparation of a colored thermoplastic composition (P), wherein the amount of the at least one colorant (E) is 0.01 to 5% by weight. In some embodiments, the process of the invention is a process for the preparation of a partially translucent colored thermoplastic composition (P), wherein the amount of the at least one colorant (E) is 0.01 to less than 2% by weight, preferably 0.02 to less than 1.5% by weight, more preferably 0.03 to less than 1% by weight, based on the total weight of components provided, and the at least one colorant does not contain carbon black.

In other embodiments, the process of the invention is a process for the preparation of a dark colored thermoplastic composition (P), wherein the at least one colorant (E) contains carbon black and/or is provided in an amount of at least 1% by weight, preferably at least 1.5% by weight, more preferably at least 2% by weight, based on the total weight of components provided.

The term "dark" in the context of the present invention means that the CIE L*a*b* value L*, as measured with 45°/0° geometry in accordance with DIN 5033-1:2017-10, using a D65 light source, is low, preferably 5.0 or less, e.g. 0.5 to 5.0, preferably 0.5 to 4.0, more preferably 0.5 to 3.0, more preferably 0.5 to 2.0.

### Applications and Properties

The present invention further relates to an article, in particular a molded article, which comprises the thermoplastic composition (P) as described above, or which is prepared by the process as described above. The shaped article may be prepared from the thermoplastic composition (P) in the presence or in the absence of other thermoplastic compositions.

Preferably, the shaped article is prepared in the absence of other thermoplastic compositions. Depending on the shaped article and its desired properties, it may further contain additives which regulate the respective properties. Such additives are known in the art, and may include any additives disclosed above.

The article, in particular the molded article, may be prepared by any known processes for thermoplastic processing. In particular preparation may be effected by thermoforming, extruding, injection molding, calendaring, blow molding, compression molding, press sintering, deep drawing, sintering, rotomolding, spraying, spinning, rolling or weaving, preferably by extrusion or injection molding, more preferably by injection molding of the thermoplastic composition (P). In some embodiments, articles may also be prepared by coating finished products with the thermoplastic composition (P).

In particular, the thermoplastic composition (P) according to the invention may preferably be used for preparing a translucent and/or colored molded article.

Thus, the invention also relates to a translucent and/or colored molded article comprising the thermoplastic composition (P) as described above or prepared by the process described above.

The molding composition (P) and the article, in particular the molded article, may be advantageously used as, or for the manufacture of, components or articles for electronic devices, household goods, e.g. household appliances and electrical equipment and exterior and/or interior automotive parts, in particular as, or for the manufacture of, visible components or articles, such as decorative strips, and outdoor cladding, such as spoilers, window frames, cover strips, hoods, panels, or parts of the radiator grille, the antenna cladding, the side mirrors, or of the front or rear lamps. A preferred application is the use as unpainted exterior automotive parts such as front grills or side mirrors.

The invention is further illustrated by the claims and examples.

### Examples

### Materials

### Graft copolymer (A-a):

The graft copolymer (A-a) is a core-shell-type impact modifier with a volume average particle size D₅₀, measured by laser diffraction, using a Beckman Coulter LS 13 320 Laser Diffraction Particle Size Analyzer, of 100 nm, having a Poly(n-butyl acrylate) rubber based graft base and a poly(styrene-co-acrylonitrile) based graft shell, prepared by the following procedure:
A reaction vessel was charged with 90.2 parts by weight of demineralized water, 0.61 parts by weight of the sodium salt of a C₁₂- to C₁₈- paraffin sulfonic acid and 0.23 parts by weight sodium bicarbonate. When the temperature in the reaction vessel reached 59°C, 0.16 parts by weight of sodium persulfate, dissolved in 5 parts by weight of demineralized water, were added. A mixture of 59.51 parts by weight butyl acrylate and 1.21 parts by weight tricyclodecenyl acrylate were added within a period of 210 min. Afterwards the reaction was continued for 60 min. The resulting latex (L-A1-a) had a total solid content of 39.6 %

An amount of 151.9 parts by weight of the latex (L-A1-a) were added to a reaction vessel together with 92.2 parts by weight of demineralized water and 0.14 parts by weight of sodium persulfate, dissolved in 3.22 parts by weight of demineralized water. Within a period of 190 min a mixture of 31.18 parts by weight of styrene and 9.31 parts by weight of acrylonitrile were added at a temperature of 61°C, followed by a post polymerization time of 60 min at 65°C. A polymer latex (L-A-a) with a total solid content of 35.5 % was obtained.

After synthesis, the latex was coagulated with magnesium sulfate solution at a temperature of approximately 60°C, followed by a sintering step at approximately 90°C. The resulting slurry was centrifuged yielding graft copolymer (A-a) as a wet rubber powder.

The refractive index of graft copolymer (A-a), as measured using a prism coupler (e.g. Metricon Model 2010) at 23 °C, calculated for a wavelength of 589.3 nm from measurements using monochromatic light having wavelengths of 401 nm, 513 nm and 688 nm, is 1.511.

### Graft copolymer (A-b):

The graft copolymer (A-b) is a core-shell-type impact modifier with a volume average particle size D₅₀, measured by laser diffraction, using a Beckman Coulter LS 13 320 Laser Diffraction Particle Size Analyzer, of 500 nm having a Poly(n-butyl acrylate) rubber based graft base and a poly(styrene-co-acrylonitrile) based graft shell, prepared by the following procedure:
A reaction vessel was charged with 70.66 parts by weight of demineralized water, 0.3 parts by weight of latex (L-A1-a) and 0.23 parts by weight of sodium bicarbonate. After heating the reaction vessel to 60°C, 0.16 parts by weight of sodium persulfate, dissolved in 5 parts by weight demineralized water, were added to the reaction mixture. A mixture of 59.51 parts by weight butyl acrylate and 1.21 parts by weight tricyclodecenyl acrylate were added within a period of 210 min. In parallel to the first feed a solution of 0.36 parts by weight of the sodium salt of a C12- to C18-paraffin sulfonic acid in 16.6 parts by weight demineralized water were also added over a period of 210 min. After 200 min, from starting the feed, the temperature is ramped to 65°C. Afterwards the reaction was continued for 60 min at 65°C. The resulting latex (L-A1-b) had a total solid content of 39.4 %.

An amount of 154 parts by weight of latex (L-A1-b) were added to a reaction vessel together with 88.29 parts by weight of demineralized water, 0.11 parts by weight of the sodium salt of a C12- to C18-paraffin sulfonic acid and 0.14 parts by weight of sodium persulfate, dissolved in 5.61 parts by weight of demineralized water. The reaction mixture was heated to 61°C. Within a period of 60 min 13.16 parts by weight of styrene are added at a temperature of 61°C, followed by a post polymerization time of 90 min, where the temperature was increased from 61 to 65°C. Then a mixture of 20.5 parts by weight of styrene and 6.83 parts by weight of acrylonitrile were added to the reaction over a period of 150 min. The reaction was continued at 65 °C for another 60 min. A latex (L-A-b) with a total solid content of 35.2 % was obtained. After synthesis, the latex was coagulated with magnesium sulfate solution at a temperature of approximately 88 °C, followed by a sintering step at approximately 130 °C. The resulting slurry was centrifuged yielding graft copolymer (A-b) as a wet rubber powder.

The refractive index of graft copolymer (A-b), as measured using a prism coupler (e.g. Metricon Model 2010) at 23 °C, calculated for a wavelength of 589.3 nm from measurements using monochromatic light having wavelengths of 401 nm, 513 nm and 688 nm, is 1.511.

The preparation of graft copolymers (A-a) and (A-b) was carried out, inter alia, on a scale, wherein 1 part by weight corresponds to 10 g.

### Random copolymer (B):

The random copolymer (B) is the commercially available NAS^{®} XC (INEOS Styrolution), which is a styrene-methyl methacrylate random copolymer with a methyl methacrylate content of 45% by weight. The refractive index of random copolymer (B), as measured using a prism coupler (e.g. Metricon Model 2010) at 23 °C, calculated for a wavelength of 589.3 nm from measurements using monochromatic light having wavelengths of 401 nm, 513 nm and 688 nm, is 1.549.

### Copolymer (C)

The copolymer (C) is the commercially available Luran^{®} VLR (INEOS Styrolution), which is a styrene-acrylonitrile copolymer with an acrylonitrile content of 35% by weight, based on the total weight of copolymer (C). The refractive index of copolymer (C), as measured using a prism coupler (e.g. Metricon Model 2010) at 23 °C, calculated for a wavelength of 589.3 nm from measurements using monochromatic light having wavelengths of 401 nm, 513 nm and 688 nm, is 1.563.

### Additives

Prior to compounding the individual substituents, the random copolymer (B) was equipped with 1000 ppm (based on the random copolymer (B)) of the antioxidants Irgafos^{®} 126 (BASF) and Irganox^{®} 1076 (BASF) as additives (D), and with 150 ppm (based on the random copolymer (B)) of ethylene-bis(stearamide) wax as further component.

### Preparation of thermoplastic composition (P) and sample plaques

Examples (E1-E18) and Comparative Examples (C1-C6) of thermoplastic compositions were prepared by compounding all constituents as disclosed in the tables below in a twin screw extruder (model ZSK26MC, Coperion GmbH, length: 1035 mm) at Tm=240°C according to the specific ratios given in the tables below. Sample plaques (approximately 7,5 x 5 cm) with a thickness of 3 mm and other samples have been prepared via injection molding (Tm: 260°C). In Comparative Examples C4-C6, the commercially available Plexiglas^{®} 7N (Röhm) was used as PMMA

The tests summarized in the tables were performed via the following standards: Luminous transmittance was measured according to ASTM D1003 - 21 using CIE illuminant C, of 13.0% or greater at a thickness of 3 mm (=LT3), or at a thickness of 2 mm, where applicable (=LT2); Notched Izod impact strength was measured according to ASTM D256 - 10 at 23 °C (NI(23)) and -30 °C (NI(-30)).

**Table 1. Compositions with same graft copolymer (A-a) and (A-b) contents were grouped**

| | | E1 | E2 | C1 | E3 | E4 | C2 | E5 | E6 | C3 |
|---|---|---|---|---|---|---|---|---|---|---|
| (A-a) | | 35 | 35 | 35 | 0 | 0 | 0 | 23.3 | 23.3 | 23.3 |
| (A-b) | | 0 | 0 | 0 | 35 | 35 | 35 | 11.7 | 11.7 | 11.7 |
| (B) | wt% | 65 | 39 | 0 | 65 | 39 | 0 | 65 | 39 | 0 |
| (C) | | 0 | 26 | 65 | 0 | 26 | 65 | 0 | 26 | 65 |
| Sum | | 100 | 100 | 100 | 100 | 100 | 100 | 100 | 100 | 100 |
| LT3 | % | 26.4 | 21.5 | 12.5 | 15.0 | 13.0 | 10.1 | 23.6 | 18.0 | 12.9 |

From Table 1 it can be seen that the thermoplastic compositions of all Examples according to the invention (E1-E6), wherein the SAN Copolymer (C) is partially or completely replaced by the SMMA random copolymer (B), have a luminous transmittance, measured according to ASTM D1003 - 21 using CIE illuminant C, of 13.0% or greater at a thickness of 3 mm (=LT3) whereas the comparative examples (C1-C3), have a luminous transmittance below 13.0.

The direct comparison of similar compositions (i.e. wherein the composition of graft copolymers (A-a) and (A-b) is the same) shows that partial replacement of SAN copolymer (C) with SMMA random copolymer (B) leads to a significant increase in luminous transmittance.

**Table 2. Compositions with same random copolymer (B) contents were grouped**

| | | E7 | E8 | E9 | E10 | E11 | E12 | E13 | E14 |
|---|---|---|---|---|---|---|---|---|---|
| (A-a) | wt% | 20.4 | 25.9 | 31.5 | 37 | 18.2 | 23.1 | 28 | 33 |
| (A-b) | | 16.6 | 11.1 | 5.5 | 0 | 14.8 | 9.9 | 5 | 0 |
| (B) | | 63 | 63 | 63 | 63 | 67 | 67 | 67 | 67 |
| Sum | | 100 | 100 | 100 | 100 | 100 | 100 | 100 | 100 |
| LT3 | % | 15.5 | 18.3 | 20.3 | 21.9 | 19.9 | 20.9 | 22.6 | 23.3 |
| LT2 | | 25.9 | 28.1 | 30.2 | 32.5 | 29.3 | 30.3 | 32.1 | 33.3 |

**Table 2 (continued)**

| | | E15 | E16 | E17 | E18 |
|---|---|---|---|---|---|
| (A-a) | wt% | 16 | 20.3 | 24.6 | 29 |
| (A-b) | | 13 | 8.7 | 4.4 | 0 |
| (B) | | 71 | 71 | 71 | 71 |
| Sum | | 100 | 100 | 100 | 100 |
| LT3 | % | 21.8 | 23.4 | 24.0 | 24.7 |
| LT2 | | 30.8 | 32.9 | 33.6 | 34.7 |

From Table 2 it can be seen that luminous transmittance values of 13.0% or above can be obtained for different thermoplastic compositions according to the invention, with varying amounts of random copolymer (B) and different compositions of graft copolymers (A-a) and (A-b). At 2 mm thickness, luminous transmittance was further increased, indicating that the compositions of the examples are suited for the preparation of thin articles which allow light to pass through. For comparison, the commercially available ASA composition LURAN S 778T (INEOS Styrolution) has a luminous transmittance at 3 mm of 8%, and a luminous transmittance at 2 mm of 15%.

**Table 3. Compositions with same graft copolymer (A-a) and (A-b) contents were grouped**

| | | E1 | E2 | C4 | E3 | E4 | C5 | E5 | E6 | C6 |
|---|---|---|---|---|---|---|---|---|---|---|
| (A-a) | wt% | 35 | 35 | 35 | 0 | 0 | 0 | 23.3 | 23.3 | 23.3 |
| (A-b) | | 0 | 0 | 0 | 35 | 35 | 35 | 11.7 | 11.7 | 11.7 |
| (B) | | 65 | 39 | 39 | 65 | 39 | 39 | 65 | 39 | 39 |
| (C) | | 0 | 26 | 0 | 0 | 26 | 0 | 0 | 26 | 0 |
| PMMA | | 0 | 0 | 26 | 0 | 0 | 26 | 0 | 0 | 26 |
| Sum | | 100 | 100 | 100 | 100 | 100 | 100 | 100 | 100 | 100 |
| NI(23) | J/m | 48 | 43 | 32 | 112 | 75 | 69 | 69 | 64 | 59 |
| N I (-30) | | 37 | 32 | 21 | 43 | 43 | 37 | 43 | 37 | 32 |

From Table 3, it can be seen that compositions, wherein a portion of the SMMA matrix is replaced with PMMA, have reduced Notched Izod impact resistance at both 23 °C and -30 °C.

Exemplary articles using the prepared compositions are: decorative strips, spoilers, window frames, cover strips, hoods, panels, parts of the radiator grille, antenna cladding, side mirror casing, front and rear lamps and front grills for automotive applications.

## Claims

1. A thermoplastic composition (P) comprising:
a) 25 to 45% by weight, preferably 28 to 42% by weight, based on the total weight of the thermoplastic composition (P), of at least one graft copolymer (A) composed of:
a1) a graft base (A1) comprising at least one alkyl (meth)acrylate-based rubber, preferably butyl acrylate-based rubber; and
a2) a graft shell (A2) comprising at least one type of vinylaromatic repeating units, preferably styrene, and optionally at least one type of vinyl cyanide repeating units, preferably acrylonitrile;
b) 25 to 75% by weight, preferably 28 to 72% by weight, based on the total weight of the thermoplastic composition (P), of at least one random copolymer (B), different from (A), comprising:
b1) 30 to 70% by weight, based on the total weight of the copolymer (B) of at least one type of alkyl(meth)acrylate repeating units (B1), preferably methyl methacrylate repeating units; and
b2) 30 to 70% by weight, based on the total weight of the copolymer (B) of at least one type of vinylaromatic repeating units (B2), preferably styrene repeating units;
c) 0 to 50% by weight, preferably 0 to 30% by weight, based on the total weight of the thermoplastic composition (P), of at least one copolymer (C), different from (A) and (B), comprising:
c1) 15 to 45% by weight, based on the total weight of the copolymer (C), of at least one type of vinyl cyanide repeating units (C1), preferably acrylonitrile repeating units; and
c2) 55 to 85% by weight, based on the total weight of the copolymer (C), of at least one type of vinylaromatic repeating units (C2), preferably styrene repeating units;
d) 0 to 2% by weight, preferably 0.01 to 1.5% by weight, more preferably 0.02 to 1% by weight, based on the total weight of the thermoplastic composition (P), of at least one additive (D) selected from UV absorbers, light stabilizers and antioxidants; and
e) 0 to 5% by weight, based on the total weight of the thermoplastic composition (P), of at least one colorant (E) selected from pigments and dyes,
with the proviso that the thermoplastic composition (P) does not comprise any homopolymers of methyl methacrylate,
wherein the amount of acrylonitrile repeating units in the random copolymer (B) is smaller than 5% by weight, based on the total weight of the copolymer (B).

2. The thermoplastic composition (P) according to claim 1, wherein the at least one random copolymer (B) is present in an amount of 30 to 70% by weight, preferably 35 to 67% by weight, based on the total weight of the thermoplastic composition (P).

3. The thermoplastic composition (P) according to claim 1 or 2, wherein the at least one copolymer (C) is present in an amount of 1 to 28% by weight, preferably 5 to 26% by weight, based on the total weight of the thermoplastic composition (P).

4. The thermoplastic composition (P) according to any one of claims 1 to 3, wherein the at least one type of alkyl(meth)acrylate repeating units (B1) is present in an amount of 35 to 65% by weight, preferably 40 to 60% by weight, based on the total weight of the copolymer (B).

5. The thermoplastic composition (P) according to any one of claims 1 to 4, wherein the graft base (A1) is present in an amount of from 40 to 90% by weight, based on the total weight of the at least one graft copolymer (A), and the graft shell (A2) is present in an amount of from 10 to 60% by weight, based on the total weight of the at least one graft copolymer (A).

6. The thermoplastic composition (P) according to any one of claims 1 to 5, wherein the graft shell (A2) comprises from 50 to 100% by weight, preferably 55 to 85% by weight, based on the total weight of graft shell (A2), of styrene or alpha-methyl styrene, and from 0 to 50% by weight, preferably from 15 to 45% by weight, based on the total weight of graft shell (A2), of acrylonitrile.

7. The thermoplastic composition (P) according to any one of claims 1 to 6, wherein the graft base (A1) comprises:
a1-1) 70 to 99.9% by weight, based on the total weight of graft base (A1), of at least one type of alkyl (meth)acrylate (A1-1), preferably butyl acrylate;
a1-2) 0 to 29.5% by weight, based on the total weight of graft base (A1), of at least one type of monofunctional monomer (A1-2) that is copolymerizable with the at least one alkyl (meth)acrylate (A1-1), preferably styrene, alpha-methyl styrene and acrylonitrile; and
a1-3) 0.1 to 10% by weight, based on the total weight of graft base (A1), of at least one type of difunctional or polyfunctional crosslinking monomer (A1-3) that is copolymerizable with the at least one alkyl (meth)acrylate (A1-1).

8. The thermoplastic composition (P) according to any one of claims 1 to 7, wherein the graft base (A1) has a volume-average particle size (D₅₀), measured by laser diffraction, of from 30 to 1000 nm, preferably 80 to 600 nm.

9. The thermoplastic composition (P) according to any one of claims 1 to 8, wherein the thermoplastic composition (P) comprises from 10 to 40% by weight, preferably from 15 to 35% by weight, based on the total weight of the thermoplastic composition (P), of at least one graft copolymer (A-a) having a volume-average particle size (D₅₀), measured by laser diffraction, of from 70 to 300 nm, and from 0 to 35% by weight, preferably from 3 to 30% by weight, based on the total weight of the thermoplastic composition (P), of at least one graft copolymer (A-b) having a volume-average particle size (D₅₀), measured by laser diffraction, of from 400 to 600 nm.

10. The thermoplastic composition (P) according to any one of claims 1 to 9, comprising 0.01 to 5% by weight, based on the total weight of the thermoplastic composition (P), of at least one colorant (E).

11. The thermoplastic composition (P) according to claim 10, comprising less than 2% by weight, preferably less than 1.5% by weight, more preferably less than 1% by weight, based on the total weight of the thermoplastic composition (P), of the at least one colorant (E), with the proviso that the thermoplastic composition (P) does not contain carbon black.

12. The thermoplastic composition (P) according to claim 10, comprising carbon black as at least one colorant (E) and/or at least 1% by weight, preferably at least 1.5% by weight, more preferably at least 2% by weight, based on the total weight of the thermoplastic composition (P), of colorants (E).

13. A process for the preparation of a thermoplastic composition (P), comprising the steps of:
i) providing at least following components:
a) 25 to 45% by weight, preferably 28 to 42% by weight, based on the total weight of components provided, of at least one graft copolymer (A) composed of:
a1) a graft base (A1) comprising at least one alkyl (meth)acrylate-based rubber, preferably butyl acrylate-based rubber; and
a2) a graft shell (A2) comprising at least one type of vinylaromatic repeating units, preferably styrene, and optionally at least one type of vinyl cyanide repeating units, preferably acrylonitrile;
b) 25 to 75% by weight, preferably 28 to 72% by weight, based on the total weight of components provided, of at least one random copolymer (B), different from (A), comprising:
b1) 30 to 70% by weight, based on the total weight of the copolymer (B) of at least one type of alkyl(meth)acrylate repeating units (B1), preferably methyl methacrylate repeating units; and
b2) 30 to 70% by weight, based on the total weight of the copolymer (B) of at least one type of vinylaromatic repeating units (B2), preferably styrene repeating units;
c) 0 to 50% by weight, preferably 0 to 30% by weight, based on the total weight of components provided, of at least one copolymer (C), different from (A) and (B), comprising:
c1) 15 to 45% by weight, based on the total weight of the copolymer (C), of at least one type of vinyl cyanide repeating units (C1), preferably acrylonitrile repeating units; and
c2) 55 to 85% by weight, based on the total weight of the copolymer (C), of at least one type of vinylaromatic repeating units (C2), preferably styrene repeating units;
d) 0 to 2% by weight, preferably 0.01 to 1.5% by weight, more preferably 0.02 to 1% by weight, based on the total weight of components provided, of at least one additive (D) selected from UV absorbers, light stabilizers and antioxidants; and
e) 0 to 5% by weight, based on the total weight of components provided, of at least one colorant (E) selected from pigments and dyes;
ii) blending the components provided in step i) to form a thermoplastic composition,
with the proviso that no homopolymers of methyl methacrylate are used in the process,
wherein the amount of acrylonitrile repeating units in the random copolymer (B) is smaller than 5% by weight, based on the total weight of the copolymer (B).

14. The process according to claim 13 for the preparation of a thermoplastic composition (P) having a luminous transmittance, measured according to ASTM D1003 - 21 using CIE illuminant C, of 13.0% or greater at a thickness of 3 mm, wherein the amount of the at least one colorant (E) is 0% by weight, based on the total weight of components provided.

15. The process according to claim 13 or 14 for the preparation of a colored thermoplastic composition (P) wherein the amount of the at least one colorant (E) is 0.01 to 5.0% by weight, based on the total weight of components provided.

16. An article, preferably a molded article, comprising the composition (P) according to any one of claims 1 to 12 or prepared by the process according to any one of claims 13 to 15, preferably an automotive part, more preferably a colored automotive part.

17. The use of the thermoplastic composition (P) according to any one of claims 1 to 12 or prepared by the process according to any one of claims 13 to 15, for preparing a shaped article, preferably a colored shaped article.

## Patentansprüche

1. Thermoplastische Zusammensetzung (P), umfassend:
a) 25 bis 45 Gew.-%, bevorzugt 28 bis 42 Gew.-%, bezogen auf das Gesamtgewicht der thermoplastischen Zusammensetzung (P), mindestens eines Pfropfcopolymers (A), zusammengesetzt aus:
a1) einer Pfropfgrundlage (A1), umfassend mindestens einen Kautschuk auf Basis von Alkyl(meth)acrylat, bevorzugt Butylacrylat; und
a2) einer Pfropfhülle (A2), umfassend mindestens eine Art von vinylaromatischen Wiederholungseinheiten, bevorzugt Styrol, und optional mindestens eine Art von Vinylcyanid-Wiederholungseinheiten, bevorzugt Acrylnitril;
b) 25 bis 75 Gew.-%, bevorzugt 28 bis 72 Gew.-%, bezogen auf das Gesamtgewicht der thermoplastischen Zusammensetzung (P), mindestens eines von (A) verschiedenen statistischen Copolymers (B), umfassend:
b1) 30 bis 70 Gew.-%, bezogen auf das Gesamtgewicht des Copolymers (B), an mindestens einer Art von Alkyl(meth)acrylat-Wiederholungseinheiten (B1), bevorzugt Methylmethacrylat-Wiederholungseinheiten; und
b2) 30 bis 70 Gew.-%, bezogen auf das Gesamtgewicht des Copolymers (B), mindestens einer Art von vinylaromatischen Wiederholungseinheiten (B2), bevorzugt Styrol-Wiederholungseinheiten;
c) 0 bis 50 Gew.-%, bevorzugt 0 bis 30 Gew.-%, bezogen auf das Gesamtgewicht der thermoplastischen Zusammensetzung (P), mindestens eines von (A) und (B) verschiedenen Copolymers (C), umfassend:
c1) 15 bis 45 Gew.-%, bezogen auf das Gesamtgewicht des Copolymers (C), mindestens einer Art von Vinylcyanid-Wiederholungseinheiten (C1), bevorzugt Acrylnitril-Wiederholungseinheiten; und
c2) 55 bis 85 Gew.-%, bezogen auf das Gesamtgewicht des Copolymers (C), mindestens einer Art von vinylaromatischen Wiederholungseinheiten (C2), bevorzugt Styrol-Wiederholungseinheiten;
d) 0 bis 2 Gew.-%, bevorzugt 0,01 bis 1,5 Gew.-%, mehr bevorzugt 0,02 bis 1 Gew.- %, bezogen auf das Gesamtgewicht der thermoplastischen Zusammensetzung (P), mindestens eines Additivs (D), ausgewählt aus UV-Absorbern, Lichtstabilisatoren und Antioxidantien; und
e) 0 bis 5 Gew.-%, bezogen auf das Gesamtgewicht der thermoplastischen Zusammensetzung (P), mindestens eines Färbemittels (E), ausgewählt aus Pigmenten und Farbstoffen,
mit der Maßgabe, dass die thermoplastische Zusammensetzung (P) keine Homopolymere von Methylmethacrylat enthält,
wobei der Anteil an Acrylnitril-Wiederholungseinheiten im statistischen Copolymer (B) weniger als 5 Gew.-%, bezogen auf das Gesamtgewicht des Copolymers (B), beträgt.

2. Thermoplastische Zusammensetzung (P) gemäß Anspruch 1, wobei das mindestens eine statistische Copolymer (B) in einer Menge von 30 bis 70 Gew.-%, bevorzugt 35 bis 67 Gew.-%, bezogen auf das Gesamtgewicht der thermoplastischen Zusammensetzung (P), vorliegt.

3. Thermoplastische Zusammensetzung (P) gemäß Anspruch 1 oder 2, wobei das mindestens eine Copolymer (C) in einer Menge von 1 bis 28 Gew.-%, bevorzugt 5 bis 26 Gew.-%, bezogen auf das Gesamtgewicht der thermoplastischen Zusammensetzung (P), vorliegt.

4. Thermoplastische Zusammensetzung (P) gemäß einem der Ansprüche 1 bis 3, wobei die mindestens eine Art von Alkyl(meth)acrylat-Wiederholungseinheiten (B1) in einer Menge von 35 bis 65 Gew.-%, bevorzugt 40 bis 60 Gew.-%, bezogen auf das Gesamtgewicht des Copolymers (B), vorliegt.

5. Thermoplastische Zusammensetzung (P) gemäß einem der Ansprüche 1 bis 4, wobei die Pfropfgrundlage (A1) in einer Menge von 40 bis 90 Gew.-%, bezogen auf das Gesamtgewicht des mindestens einen Pfropfcopolymers (A), und die Pfropfhülle (A2) in einer Menge von 10 bis 60 Gew.-%, bezogen auf das Gesamtgewicht des mindestens einen Pfropfcopolymers (A), vorliegt.

6. Thermoplastische Zusammensetzung (P) gemäß einem der Ansprüche 1 bis 5, wobei die Pfropfhülle (A2) 50 bis 100 Gew.-%, bevorzugt 55 bis 85 Gew.-%, bezogen auf das Gesamtgewicht der Pfropfhülle (A2), Styrol oder Alpha-Methylstyrol, und 0 bis 50 Gew.-%, bevorzugt 15 bis 45 Gew.-%, bezogen auf das Gesamtgewicht der Pfropfhülle (A2), Acrylnitril umfasst.

7. Thermoplastische Zusammensetzung (P) gemäß einem der Ansprüche 1 bis 6, wobei die Pfropfgrundlage (A1) umfasst:
a1-1) 70 bis 99,9 Gew.-%, bezogen auf das Gesamtgewicht der Pfropfgrundlage (A1), mindestens einer Art von Alkyl(meth)acrylat (A1-1), bevorzugt Butylacrylat;
a1-2) 0 bis 29,5 Gew.-%, bezogen auf das Gesamtgewicht der Pfropfgrundlage (A1), mindestens einer Art eines monofunktionellen Monomers (A1-2), das mit dem mindestens einen Alkyl(meth)acrylat (A1-1) copolymerisierbar ist, bevorzugt Styrol, α-Methylstyrol und Acrylnitril; und
a1-3) 0,1 bis 10 Gew.-%, bezogen auf das Gesamtgewicht der Pfropfgrundlage (A1), mindestens einer Art von difunktionellem oder polyfunktionellem Vernetzungsmonomer (A1-3), das mit dem mindestens einen Alkyl(meth)acrylat (A1-1) copolymerisierbar ist.

8. Thermoplastische Zusammensetzung (P) gemäß einem der Ansprüche 1 bis 7, wobei die Pfropfgrundlage (A1) eine volumendurchschnittliche Partikelgröße (D₅₀), gemessen mittels Laserbeugung, von 30 bis 1000 nm, bevorzugt 80 bis 600 nm, aufweist.

9. Thermoplastische Zusammensetzung (P) gemäß einem der Ansprüche 1 bis 8, wobei die thermoplastische Zusammensetzung (P) 10 bis 40 Gew.-%, bevorzugt 15 bis 35 Gew.-%, bezogen auf das Gesamtgewicht der thermoplastischen Zusammensetzung (P), mindestens eines Pfropfcopolymers (A-a) mit einer volumendurchschnittlichen Partikelgröße (D₅₀), gemessen mittels Laserbeugung, von 70 bis 300 nm, und 0 bis 35 Gew.- %, bevorzugt 3 bis 30 Gew.-%, bezogen auf das Gesamtgewicht der thermoplastischen Zusammensetzung (P), mindestens eines Pfropfcopolymers (A-b) mit einer volumendurchschnittlichen Partikelgröße (D₅₀), gemessen mittels Laserbeugung, von 400 bis 600 nm, aufweist.

10. Thermoplastische Zusammensetzung (P) gemäß einem der Ansprüche 1 bis 9, umfassend 0,01 bis 5 Gew.-%, bezogen auf das Gesamtgewicht der thermoplastischen Zusammensetzung (P), mindestens eines Färbemittels (E).

11. Thermoplastische Zusammensetzung (P) gemäß Anspruch 10, umfassend weniger als 2 Gew.-%, bevorzugt weniger als 1,5 Gew.-%, mehr bevorzugt weniger als 1 Gew.-%, bezogen auf das Gesamtgewicht der thermoplastischen Zusammensetzung (P), des mindestens einen Färbemittels (E), mit der Maßgabe, dass die thermoplastische Zusammensetzung (P) kein Carbon Black enthält.

12. Thermoplastische Zusammensetzung (P) gemäß Anspruch 10, umfassend Carbon Black als mindestens ein Färbemittel (E) und/oder mindestens 1 Gew.-%, bevorzugt mindestens 1,5 Gew.-%, mehr bevorzugt mindestens 2 Gew.-%, bezogen auf das Gesamtgewicht der thermoplastischen Zusammensetzung (P), an Färbemitteln (E).

13. Verfahren zur Herstellung einer thermoplastischen Zusammensetzung (P), umfassend die folgenden Schritte:
i) Bereitstellen mindestens der folgenden Komponenten:
a) 25 bis 45 Gew.-%, bevorzugt 28 bis 42 Gew.-%, bezogen auf das Gesamtgewicht der bereitgestellten Komponenten, mindestens eines Pfropfcopolymers (A), zusammengesetzt aus:
a1) einer Pfropfgrundlage (A1), umfassend mindestens einen Kautschuk auf Basis von Alkyl(meth)acrylat, bevorzugt Butylacrylat; und
a2) einer Pfropfhülle (A2), umfassend mindestens eine Art von vinylaromatischen Wiederholungseinheiten, bevorzugt Styrol, und optional mindestens eine Art von Vinylcyanid-Wiederholungseinheiten, bevorzugt Acrylnitril;
b) 25 bis 75 Gew.-%, bevorzugt 28 bis 72 Gew.-%, bezogen auf das Gesamtgewicht der bereitgestellten Komponenten, mindestens eines von (A) verschiedenen statistischen Copolymers (B), umfassend:
b1) 30 bis 70 Gew.-%, bezogen auf das Gesamtgewicht des Copolymers (B), an mindestens einer Art von Alkyl(meth)acrylat-Wiederholungseinheiten (B1), bevorzugt Methylmethacrylat-Wiederholungseinheiten; und
b2) 30 bis 70 Gew.-%, bezogen auf das Gesamtgewicht des Copolymers (B), mindestens einer Art von vinylaromatischen Wiederholungseinheiten (B2), bevorzugt Styrol-Wiederholungseinheiten;
c) 0 bis 50 Gew.-%, bevorzugt 0 bis 30 Gew.-%, bezogen auf das Gesamtgewicht der bereitgestellten Komponenten, mindestens eines von (A) und (B) verschiedenen Copolymers (C), umfassend:
c1) 15 bis 45 Gew.-%, bezogen auf das Gesamtgewicht des Copolymers (C), mindestens einer Art von Vinylcyanid-Wiederholungseinheiten (C1), bevorzugt Acrylnitril-Wiederholungseinheiten; und
c2) 55 bis 85 Gew.-%, bezogen auf das Gesamtgewicht des Copolymers (C), mindestens einer Art von vinylaromatischen Wiederholungseinheiten (C2), bevorzugt Styrol-Wiederholungseinheiten;
d) 0 bis 2 Gew.-%, bevorzugt 0,01 bis 1,5 Gew.-%, mehr bevorzugt 0,02 bis 1 Gew.-%, bezogen auf das Gesamtgewicht der bereitgestellten Komponenten, mindestens eines Additivs (D), ausgewählt aus UV-Absorbern, Lichtstabilisatoren und Antioxidantien; und
e) 0 bis 5 Gew.-%, bezogen auf das Gesamtgewicht der bereitgestellten Komponenten, mindestens eines Färbemittels (E), ausgewählt aus Pigmenten und Farbstoffen;
ii) Vermischen der in Schritt i) bereitgestellten Komponenten zu einer thermoplastischen Zusammensetzung,
mit der Maßgabe, dass in dem Verfahren keine Homopolymere von Methylmethacrylat verwendet werden,
wobei der Anteil an Acrylnitril-Wiederholungseinheiten im statistischen Copolymer (B) weniger als 5 Gew.-%, bezogen auf das Gesamtgewicht des Copolymers (B), beträgt.

14. Verfahren gemäß Anspruch 13 zur Herstellung einer thermoplastischen Zusammensetzung (P) mit einer Lichtdurchlässigkeit, gemessen gemäß ASTM D1003 - 21 unter Verwendung der CIE-Luminante C, von 13,0 % oder mehr bei einer Dicke von 3 mm, wobei die Menge des mindestens einen Färbemittels (E) 0 Gew.-% beträgt, bezogen auf das Gesamtgewicht der bereitgestellten Komponenten.

15. Verfahren gemäß Anspruch 13 oder 14 zur Herstellung einer gefärbten thermoplastischen Zusammensetzung (P), wobei die Menge des mindestens einen Färbemittels (E) 0,01 bis 5,0 Gew.-%, bezogen auf das Gesamtgewicht der bereitgestellten Komponenten, beträgt.

16. Gegenstand, bevorzugt Formteil, umfassend die Zusammensetzung (P) gemäß einem der Ansprüche 1 bis 12 oder hergestellt durch das Verfahren gemäß einem der Ansprüche 13 bis 15, bevorzugt ein Automobilteil, mehr bevorzugt ein gefärbtes Automobilteil.

17. Verwendung der thermoplastischen Zusammensetzung (P) gemäß einem der Ansprüche 1 bis 12 oder hergestellt nach dem Verfahren gemäß einem der Ansprüche 13 bis 15 zur Herstellung eines Formteils, bevorzugt eines gefärbten Formteils.

## Revendications

1. Composition thermoplastique (P) comprenant :
a) 25 à 45 % en poids, de préférence 28 à 42 % en poids, par rapport au poids total de la composition thermoplastique (P), d'au moins un copolymère greffé (A) composé de :
a1) une base de greffage (A1) comprenant au moins un caoutchouc à base de (méth)acrylate d'alkyle, de préférence un caoutchouc à base d'acrylate de butyle ; et
a2) une enveloppe de greffage (A2) comprenant au moins un type de motifs de répétition vinylaromatiques, de préférence le styrène, et éventuellement au moins un type de motifs de répétition de cyanure de vinyle, de préférence l'acrylonitrile ;
b) 25 à 75 % en poids, de préférence 28 à 72 % en poids, par rapport au poids total de la composition thermoplastique (P), d'au moins un copolymère statistique (B), différent de (A), comprenant :
b1) 30 à 70 % en poids, par rapport au poids total du copolymère (B), d'au moins un type de motifs de répétition de (méth)acrylate d'alkyle (B1), de préférence des motifs de répétition de méthacrylate de méthyle ; et
b2) 30 à 70 % en poids, par rapport au poids total du copolymère (B), d'au moins un type de motifs de répétition vinylaromatiques (B2), de préférence des motifs de répétition de styrène ;
c) 0 à 50 % en poids, de préférence 0 à 30 % en poids, par rapport au poids total de la composition thermoplastique (P), d'au moins un copolymère (C), différent de (A) et (B), comprenant :
c1) 15 à 45 % en poids, par rapport au poids total du copolymère (C), d'au moins un type de motifs de répétition de cyanure de vinyle (C1), de préférence des motifs de répétition d'acrylonitrile ; et
c2) 55 à 85 % en poids, par rapport au poids total du copolymère (C), d'au moins un type de motifs de répétition vinylaromatiques (C2), de préférence des motifs de répétition de styrène ;
d) 0 à 2 % en poids, de préférence 0,01 à 1,5 % en poids, plus préférablement 0,02 à 1 % en poids, par rapport au poids total de la composition thermoplastique (P), d'au moins un additif (D) choisi parmi les absorbeurs d'UV, les stabilisants à la lumière et les antioxydants ; et
e) 0 à 5 % en poids, par rapport au poids total de la composition thermoplastique (P), d'au moins un colorant (E) choisi parmi les pigments et les colorants,
à condition que la composition thermoplastique (P) ne comprenne aucun homopolymère de méthacrylate de méthyle,
dans laquelle la quantité de motifs de répétition d'acrylonitrile dans le copolymère statistique (B) est inférieure à 5 % en poids, par rapport au poids total du copolymère (B).

2. Composition thermoplastique (P) selon la revendication 1, dans laquelle ledit au moins un copolymère statistique (B) est présent en une quantité de 30 à 70 % en poids, de préférence de 35 à 67 % en poids, par rapport au poids total de la composition thermoplastique (P).

3. Composition thermoplastique (P) selon la revendication 1 ou 2, dans laquelle ledit au moins un copolymère (C) est présent en une quantité de 1 à 28 % en poids, de préférence de 5 à 26 % en poids, par rapport au poids total de la composition thermoplastique (P).

4. Composition thermoplastique (P) selon l'une des revendications 1 à 3, dans laquelle ledit au moins un type de motifs de répétition de (méth)acrylate d'alkyle (B1) est présent en une quantité de 35 à 65 % en poids, de préférence de 40 à 60 % en poids, par rapport au poids total du copolymère (B).

5. Composition thermoplastique (P) selon l'une des revendications 1 à 4, dans laquelle la base de greffage (A1) est présente en une quantité de 40 à 90 % en poids, par rapport au poids total dudit au moins un copolymère greffé (A), et l'enveloppe de greffage (A2) est présente en une quantité de 10 à 60 % en poids, par rapport au poids total dudit au moins un copolymère greffé (A).

6. Composition thermoplastique (P) selon l'une des revendications 1 à 5, dans laquelle l'enveloppe de greffage (A2) comprend de 50 à 100 % en poids, de préférence de 55 à 85 % en poids, par rapport au poids total de l'enveloppe de greffage (A2), de styrène ou d'alpha-méthylstyrène, et de 0 à 50 % en poids, de préférence de 15 à 45 % en poids, par rapport au poids total de l'enveloppe de greffage (A2), d'acrylonitrile.

7. Composition thermoplastique (P) selon l'une des revendications 1 à 6, dans laquelle la base de greffage (A1) comprend :
a1-1) 70 à 99,9 % en poids, par rapport au poids total de la base de greffage (A1), d'au moins un type de (méth)acrylate d'alkyle (A1-1), de préférence l'acrylate de butyle ;
a1-2) 0 à 29,5 % en poids, par rapport au poids total de la base de greffage (A1), d'au moins un type de monomère monofonctionnel (A1-2) copolymérisable avec ledit au moins un (méth)acrylate d'alkyle (A1-1), de préférence le styrène, l'alpha-méthylstyrène et l'acrylonitrile ; et
a1-3) 0,1 à 10 % en poids, par rapport au poids total de la base de greffage (A1), d'au moins un type de monomère de réticulation difonctionnel ou polyfonctionnel (A1-3) qui est copolymérisable avec ledit au moins un (méth)acrylate d'alkyle (A1-1).

8. Composition thermoplastique (P) selon l'une des revendications 1 à 7, dans laquelle la base de greffage (A1) présente une taille moyenne en volume des particules (D₅₀), mesurée par diffraction laser, comprise entre 30 et 1000 nm, de préférence entre 80 et 600 nm.

9. Composition thermoplastique (P) selon l'une des revendications 1 à 8, dans laquelle la composition thermoplastique (P) comprend de 10 à 40 % en poids, de préférence de 15 à 35 % en poids, par rapport au poids total de la composition thermoplastique (P), d'au moins un copolymère greffé (A-a) ayant une taille moyenne en volume des particules (D₅₀), mesurée par diffraction laser, comprise entre 70 et 300 nm, et de 0 à 35 % en poids, de préférence de 3 à 30 % en poids, par rapport au poids total de la composition thermoplastique (P), d'au moins un copolymère greffé (A-b) ayant une taille moyenne en volume des particules (D₅₀), mesurée par diffraction laser, comprise entre 400 et 600 nm.

10. Composition thermoplastique (P) selon l'une des revendications 1 à 9, comprenant 0,01 à 5 % en poids, par rapport au poids total de la composition thermoplastique (P), d'au moins un colorant (E).

11. Composition thermoplastique (P) selon la revendication 10, comprenant moins de 2 % en poids, de préférence moins de 1,5 % en poids, plus préférablement moins de 1 % en poids, par rapport au poids total de la composition thermoplastique (P), dudit au moins un colorant (E), à condition que la composition thermoplastique (P) ne contienne pas de noir de carbone.

12. Composition thermoplastique (P) selon la revendication 10, comprenant du noir de carbone en tant qu'au moins un colorant (E) et/ou au moins 1 % en poids, de préférence au moins 1,5 % en poids, plus préférablement au moins 2 % en poids, par rapport au poids total de la composition thermoplastique (P), de colorants (E).

13. Procédé de préparation d'une composition thermoplastique (P), comprenant les étapes suivantes :
i) fournir au moins les composants suivants :
a) 25 à 45 % en poids, de préférence 28 à 42 % en poids, par rapport au poids total des composants fournis, d'au moins un copolymère greffé (A) composé de :
a1) une base de greffage (A1) comprenant au moins un caoutchouc à base de (méth)acrylate d'alkyle, de préférence un caoutchouc à base d'acrylate de butyle ; et
a2) une enveloppe de greffage (A2) comprenant au moins un type de motifs de répétition vinylaromatiques, de préférence le styrène, et éventuellement au moins un type de motifs de répétition de cyanure de vinyle, de préférence l'acrylonitrile ;
b) 25 à 75 % en poids, de préférence 28 à 72 % en poids, par rapport au poids total des composants fournis, d'au moins un copolymère statistique (B), différent de (A), comprenant :
b1) 30 à 70 % en poids, par rapport au poids total du copolymère (B), d'au moins un type de motifs de répétition de (méth)acrylate d'alkyle (B1), de préférence des motifs de répétition de méthacrylate de méthyle ; et
b2) 30 à 70 % en poids, par rapport au poids total du copolymère (B), d'au moins un type de motifs de répétition vinylaromatiques (B2), de préférence des motifs de répétition de styrène ;
c) 0 à 50 % en poids, de préférence 0 à 30 % en poids, par rapport au poids total des composants fournis, d'au moins un copolymère (C), différent de (A) et (B), comprenant :
c1) 15 à 45 % en poids, par rapport au poids total du copolymère (C), d'au moins un type de motifs de répétition de cyanure de vinyle (C1), de préférence des motifs de répétition d'acrylonitrile ; et
c2) 55 à 85 % en poids, par rapport au poids total du copolymère (C), d'au moins un type de motifs de répétition vinylaromatiques (C2), de préférence des motifs de répétition de styrène ;
d) 0 à 2 % en poids, de préférence 0,01 à 1,5 % en poids, plus préférablement 0,02 à 1 % en poids, par rapport au poids total des composants fournis, d'au moins un additif (D) choisi parmi les absorbeurs d'UV, les stabilisants à la lumière et les antioxydants ; et
e) 0 à 5 % en poids, par rapport au poids total des composants fournis, d'au moins un colorant (E) choisi parmi les pigments et les colorants ;
ii) mélanger les composants fournis à l'étape i) pour former une composition thermoplastique,
à condition qu'aucun homopolymère de méthacrylate de méthyle ne soit utilisé dans le procédé,
dans laquelle la quantité de motifs de répétition d'acrylonitrile dans le copolymère statistique (B) est inférieure à 5 % en poids, par rapport au poids total du copolymère (B).

14. Procédé selon la revendication 13 pour la préparation d'une composition thermoplastique (P) ayant une transmittance lumineuse, mesurée selon la norme ASTM D1003 - 21 en utilisant l'illuminant CIE C, de 13,0 % ou plus pour une épaisseur de 3 mm, dans lequel la quantité dudit au moins un colorant (E) est de 0 % en poids, par rapport au poids total des composants fournis.

15. Procédé selon la revendication 13 ou 14 pour la préparation d'une composition thermoplastique colorée (P) dans laquelle la quantité dudit au moins un colorant (E) est comprise entre 0,01 et 5,0 % en poids, par rapport au poids total des composants fournis.

16. Article, de préférence un article moulé, comprenant la composition (P) selon l'une des revendications 1 à 12 ou préparé par le procédé selon l'une des revendications 13 à 15, de préférence une pièce automobile, plus préférablement une pièce automobile colorée.

17. Utilisation de la composition thermoplastique (P) selon l'une des revendications 1 à 12 ou préparée par le procédé selon l'une des revendications 13 à 15, pour la préparation d'un article moulé, de préférence un article moulé coloré.
